# EUROPÄISCHE PATENTSCHRIFT

(11) **EP 2 303 027 B1**
(45) Veröffentlichungstag und Bekanntmachung des Hinweises auf die Patenterteilung: **23.01.2019**
(21) Anmeldenummer: 09711082.9
(22) Anmeldetag: 10.02.2009
(51) Int. Cl.: A21B 1/48, H05B 6/02, A21B 5/02, H05B 6/10

(54) **INDUKTIONSBACKOFEN**
INDUCTION HEATING BAKING OVEN
FOUR DE CUISSON AVEC DES MOYENS INDUCTEURS

(30) Priorität: 12.02.2008 AT 2252008
(43) Veröffentlichungstag der Anmeldung: 06.04.2011
(73) Patentinhaber: Haas Food Equipment GmbH, 1210 Wien (AT)
(72) Erfinder: HAAS, Johann, A-3400 Klosterneuburg (AT); JIRASCHEK, Stefan, A-2202 Königsbrunn (AT); HAAS, Johannes, A-1040 Wien (AT); HAAS, Josef, A-1210 Wien (AT); KOLETNIK, Erich, A-3400 Klosterneuburg (AT); OBERMAIER, Fritz, A-1210 Wien (AT); PICKART, Marcus, A-3042 Würmla (AT)
(74) Vertreter: Puchberger & Partner Patentanwälte
(86) Internationale Anmeldenummer: PCT/EP2009/000906
(87) Internationale Veröffentlichungsnummer: WO 2009/100873

(56) Entgegenhaltungen:
- EP-A1- 1 880 646
- EP-A2- 1 479 296
- WO-A1-00/65918
- WO-A1-95/03713
- WO-A1-2005/006866
- DE-A1- 3 217 470
- JP-A- H1 023 853
- JP-A- 2004 014 233
- JP-A- 2004 242 605
- JP-B2- 2 866 347
- US-A- 3 187 152
- US-A- 4 987 828
- US-A1- 2003 015 523
- US-A1- 2003 051 721

## Beschreibung

### Gebiet der Erfindung

Die Erfindung bezieht sich auf Backöfen mit einer Eingabestation, einem Backraum, einer Ausgabestation, entlang einer durch den Backraum führenden Umlaufbahn angeordneten Backplatten und einer Fördereinrichtung für die Backplatten.

Bekannte Backöfen dieser Art werden für die Herstellung von sehr unterschiedliche Produkten eingesetzt. Eine Produktgruppe umfasst Pfannkuchen, Palatschinken etc. Eine andere Produktgruppe umfasst weiche Waffeln, American Pancakes, Canadian Pancakes etc. Eine weitere Produktgruppe umfasst knusprig-spröde Waffeln, wie z. B. knusprig-spröde Waffelblätter, oder knusprig-spröde Flachwaffeln, die zahlreiche Hohlkörperhälften enthalten. Eine weitere Produktgruppe umfasst nach der Waffelbacktechnologie hergestellte Verpackungsteile wie ebene Blätter, Tassen, Trays etc. Eine weitere Produktgruppe umfasst knusprig-spröde Waffeln, die aus im backwarmen Zustand plastisch verformbaren, flachen Waffeln hergestellt werden, die im backwarmen Zustand in Hohlkörper umgeformt und dann als Hohlkörper erstarren gelassen werden. Solche Produkt sind gerollte Waffeltüten für Speiseeis, tiefgezogene Waffelbecher für Speiseeis oder knusprig-spröde Waffelröllchen etc.

### Stand der Technik

Bekannten Backöfen dieser Art sind zumeist als gasbeheizte Backöfen ausgeführt. Im Backraum sind entlang der Umlaufbahn der Backplatten gasbeheizte Infrarotstrahler oder Gasflammenbrenner angeordnet, die ihre heißen Verbrennungsgase an den Backraum abgeben, während sie die Rückseiten der umlaufenden Backplatten beheizen. Im Gestell dieser Backöfen sind lange und verzweigte, zu den im Backraum angeordneten Gasbrennern führende Rohrleitungen für das zu verbrennende Heizgas untergebracht. Die Backöfen sind mit großen Lufteintrittsöffnungen versehen, durch die große Luftmengen in den Backofen eingesaugt werden, die als Verbrennungsluft für die Gasbrenner und zum Kühlen der von diesen erzeugten heißen Verbrennungsgasen benötigt werden.

Es sind auch sogenannte elektrisch beheizte Backöfen bekannt, bei denen in die Backplatten eingebaute, als elektrische Widerstandsheizung ausgebildete Heizspiralen die Backplatten erwärmen. Jede Backplatte ist mit einer in der Backplatte angeordneten Heizspirale und einem von der Rückseite der Backplatte abstehenden Stromabnehmer versehen. Die Heizspirale ist in der Backplatte in einem zur Backplattenrückseite hin offenen Hohlraum angeordnet. Die Heizspirale ist im Inneren der Backplatte mit dem Stromabnehmer elektrisch leitend verbunden. Der Stromabnehmer selbst ist an der Backplattenrückseite beweglich befestigt und mit einer ihn von der Backplattenrückseite wegdrückenden Federung versehen. Die mit einer elektrischen Widerstandsheizung versehenen Backplatten werden von der Fördereinrichtung des Backofens durch den Backraum befördert. In diesem sind entlang der Umlaufbahn der Backplatten Stromschienen angeordnet. Wenn die Backplatten in den Backraum eintreten, kommen ihre Stromabnehmer mit den Stromschienen in Eingriff. Dabei werden die Stromabnehmer jeweils gegen die Backplattenrückseite gedrückt und ihre Federung wird zusammengedrückt. Im Backraum gleiten die Stromabnehmer an den Stromschienen entlang und entnehmen durch ihren Kontakt mit den Stromschienen Strom aus den Stromschienen und leiten den Strom zur Heizspirale der jeweiligen Backplatte. Wenn die Backplatten den Backraum verlassen, werden die Stromabnehmer von den Stromschienen abgezogen und ihre Federung wird entlastet. Die Stromabnehmer federn dann in ihre unbelastete Ausgangsstellung zurück.

Heizvorrichtungen sind unter anderem aus der EP 1 479 296 A2, der JP 2004242605 A, der US 2003/051721 A1, der US 49878282 A, der US 2003/015523 A1, der JP 2004014233 A, der US 3187152 A, der EP 1880646 A1, der WO 2005006866 A1, der WO 0065918 A1 und der WO 9503713 A1 bekannt.

Aus der JP 2004-242605 A ist ein pyrolytisches Reinigungsverfahren für Metallformen bekannt, die bei der Herstellung von Nahrungsmitteln verwendet werden. Zur Durchführung des Reinigungsverfahrens wird eine elektrische Induktionsspule knapp über der leeren Metallform angeordnet und die Metallform wird induktiv auf 500 °C und mehr erhitzt. Die auf der Oberfläche der Metallform haftenden Verschmutzungen verbrennen und lösen sich beim Abkühlen der Metallform von deren Oberfläche. Nach dem Abkühlen der Metallform können die von der Oberfläche der Metallform abgelösten Verschmutzungen leicht von der Oberfläche der Metallform abgestreift werden, ohne die Oberfläche der Metallform zu beschädigen. Als Beispiel ist das pyrolytische Reinigen einer ebenen, kreissektorförmigen Backfläche angegeben, die auf der unteren Backplatte einer aufgeklappten Backzange angeordnet ist. Zum Reinigen der Backfläche wird in die aufgeklappte Backzange eine flache, kreisförmige Induktionsspule eingeführt und knapp über der unteren Backplatte der Backzange angeordnet. Nach dem induktiven Erwärmen der unteren Backplatte wird die Induktionsspule aus der aufgeklappten Backzange wieder herausgezogen. Die Backzange gehört zu einem Backofen, der in einer Zeichnungsfigur der JP 2004-242605 A nur mit einem Teilabschnitt schematisch dargestellt ist und dessen Backofenkonstruktion der JP 2004-242605 A nicht zu entnehmen ist. Die Induktionsspule gehört zu der das pyrolytische Reinigungsverfahren durchführenden Reinigungsvorrichtung.

Aus der JP 2004 014233 A ist es bekannt, die Induktionsspule einer Induktionsheizung in einer eigenen Apparateeinheit anzuordnen, bei der die Induktionsspule am Boden eines nach unten offenen Gehäuses angeordnet ist, in dem eine Induktionsspulenkühlung angeordnet ist. In dem Gehäuse ist eine horizontale Trennplatte zwischen den Kondensatoren der Induktionsheizung und der Induktionsspule angeordnet. Die Trennplatte begrenzt einen über der Induktionsspule angeordneten, horizontalen Kühlkanal nach oben. Die von einem außerhalb des Gehäuses angeordneten Gebläse erzeugte Kühlluft wird über Kühlluftleitungen zum Gehäuse befördert und im Gehäuse durch den horizontalen Kühlkanal geleitet, um die an der Unterseite des Kühlkanals angeordnet Induktionsspule an der Oberseite zu kühlen. Als Anwendungsbeispiel ist ein mit einer solchen Induktionsheizung versehener, als Plattengriller ausgebildeter Grillapparat angegeben. Die mit der Induktionsspule versehene Apparateeinheit ist oberhalb der horizontalen Grillstrecke des Grillapparats mit Abstand über den Grillplatten angeordnet, damit die während des Grillprozesses aus dem Grillgut austretenden Säfte und das beim Reinigen der Grillplatten eingesetzte Waschwasser von den in der horizontalen Grillstrecke angeordneten Grillplatten nach unten abfließen können, ohne in die mit der Induktionsspule versehene Apparateeinheit einzudringen und dort elektrische Kurzschlüsse zu erzeugen. Unterhalb der horizontalen Grillstrecke ist eine mit nach oben vorstehenden Rändern versehene Tropftasse angeordnet, in der die während des Grillprozesses aus dem Grillgut austretenden Säfte und das beim Reinigen der Grillplatten eingesetzte Waschwasser aufgefangen wird.

Aus der WO 00/65918 A1 ist eine endlose Bänder erzeugende Backvorrichtung bekannt. In der Backvorrichtung ist ein stehend angeordneter, zylindrischer Backring vorgesehen, der mit seiner zylindrisch gekrümmten Innen- bzw. Außenseite jeweils eine endlose Backfläche bildet, auf der die endlosen Bänder hergestellt werden. Der zylindrische Backring rotiert um seine horizontal angeordnete Mittelachse und wird dabei durch eine Induktionsspule induktiv erwärmt, die entlang dem zylindrisch gekrümmten Backring angeordnet ist. Zum Herstellen eines endlosen Bandes wird ein flüssiger Waffelteig kontinuierlich auf eine endlose Backfläche des Backringes aufgebracht. Dadurch entsteht auf der endlosen Backfläche eine endloser Teigstreifen, der auf dem heißen, rotierenden Backring gebacken und als endloses, gebackenes Waffelband vom Backring aufgenommen wird.

Aus der EP 1 479 296 A2 ist eine Backvorrichtung bekannt, in der auf einem horizontal ausgerichteten, ebenen Bandtrumm eines kontinuierlich umlaufenden, endlosen Stahlbandes ein endloses Band gebacken wird. Das ebene Bandtrumm wird durch mehrere, entlang dem Bandtrumm mit Abstand hintereinander angeordnete Induktionsheizgeräte induktiv erwärmt, die im Bandtrumm ein sich in Längsrichtung des Bandtrummes änderndes Temperaturprofil erzeugen.

Aus der angegebenen WO 9503713 A1 ist eine Kochanordnung, welche bevorzugt für das Braten, Grillen und Chargrilling von Nahrungsmitteln eingesetzt wird, bekannt. Nachteilig an dieser Vorrichtung ist aber, dass die Heizvorrichtungen bevorzugt beabstandet vom Kochpfad angeordnet sind und die Temperatur entlang des Kochpfades abnimmt.

Weiterer relevanter Stand der Technik ist aus den Dokumenten JP 2 866347 B2, DE 32 17 470 A1 und JP H10 23853 A bekannt, wobei die JP 2 866347 B2 die Merkmale des Oberbegriffes offenbart.

### Zusammenfassung der Erfindung

Aufgabe der Erfindung ist es, Backöfen der eingangs genannten Art zu verbessern.
Dazu schlägt die Erfindung einen neuen Backofen entsprechend dem Anspruch 1 vor.

Der neue Backofen hat gegenüber den gasbeheizten Backöfen den Vorteil, dass die von
den Gasbrennern im Backraum erzeugten, heißen Verbrennungsgase entfallen, sodass die Backofenkonstruktion entsprechend vereinfacht werden kann. In einem erfindungsgemäßen Backofen sind weder zu den Gasbrennern führende Rohrleitungen für das zu verbrennende Heizgas erforderlich noch große Lufteintrittsöffnungen für die großen in den Backofen einzusaugenden Luftmengen, die als Verbrennungsluft für die Gasbrenner bzw. zum Kühlen der von diesen erzeugten heißen Verbrennungsgase benötigt werden.

Der neue Backofen hat gegenüber den oben genannten, elektrisch beheizten Backöfen den Vorteil, dass sowohl die Backplatten als auch die Backofenkonstruktion deutlich vereinfacht werden kann, weil ja bei den Backplatten weder in die Backplatten eingebaute Heizspiralen, noch von den Backplatten abstehende Stromabnehmer und beim Backraum keine als Gleitschienen für die Stromabnehmer ausgebildete Stromschienen erforderlich sind.

Beim neuen Backofen wird die für den Backprozess erforderliche Prozesswärme durch das berührungsfreie induktiv Erwärmen der jeweils als Suszeptorplatten ausgebildeten Backplatten erzeugt. Beim neuen Backofen erstreckt sich der langgestreckte, parallel zur Umlaufbahn der Backplatten angeordnete Induktor über mehrere hintereinander angeordnete Suszeptorplatten. Dieser Induktor erzeugt ein breites und großflächiges Magnetfeld, das sich längs der Umlaufbahn über mehrere Suszeptorplatten erstreckt und diese berührungsfrei induktiv erwärmt.

Gemäß einem weiteren Merkmal der Erfindung kann vorgesehen sein, dass die Backplatten entlang einer Umlaufbahn angeordnet sind, die durch zwei übereinander angeordnete, horizontale Transportbahnen führt, und dass an beiden Transportbahnen eine Backzone vorgesehen ist, in der zumindest ein langgestreckter Induktor vorgesehen ist, der sich längs der Umlaufbahn über mehrere Backplatten erstreckt und ein sich längs dem Induktor erstreckendes Magnetfeld erzeugt, das mehrere entlang dem Induktor hintereinander angeordnete, als Suszeptorplatten ausgebildete Backplatten gleichzeitig berührungsfrei induktiv erwärmt.

Gemäß einem weiteren Merkmal der Erfindung kann vorgesehen sein, dass die Backplatten entlang einer kreisförmigen Umlaufbahn angeordnet und auf einem um eine vertikale Drehachse drehbaren Drehtisch befestigt sind, der die Backplatten mit seiner Drehbewegung durch den Backraum befördert, und dass im Backraum eine Backzone vorgesehen ist, in der zumindest ein langgestreckter Induktor vorgesehen ist, der sich längs der kreisförmigen Umlaufbahn über mehrere Backplatten erstreckt und ein sich längs dem Induktor erstreckendes Magnetfeld erzeugt, das mehrere entlang dem Induktor hintereinander angeordnete, als Suszeptorplatten ausgebildete Backplatten gleichzeitig berührungsfrei induktiv erwärmt.

In der Erfindung wird ein neuer Backofen vorgeschlagen, bei dem entlang von zwei durch den Backraum führenden Umlaufbahnen angeordnete, jeweils als Suszeptorplatten ausgebildete, obere und untere Backplatten vorgesehen sind, die in Backzangen aufgenommen sind, die entlang einer durch den Backraum führenden Umlaufbahnen angeordnet sind und von der Fördereinrichtung des Backofens im geschlossenen Zustand durch den Backraum befördert werden. Bei diesem Backofen ist im Backraum zumindest eine Backzone vorgesehen, in der sowohl oberhalb als auch unterhalb der Umlaufbahn der Backzangen jeweils zumindest ein langgestreckter Induktor angeordnet ist, der sich längs der Umlaufbahn der Backzangen über mehrere Backzangen erstreckt und ein sich längs dem Induktor erstreckendes Magnetfeld erzeugt, das die Suszeptorplatten von mehreren Backzangen gleichzeitig berührungsfrei induktiv erwärmt.

Bei diesem Backofen entstehen die gebackenen Formkörper in den geschlossenen Backzangen zwischen den übereinander angeordneten, als Suszeptorplatten ausgebildeten, oberen und unteren Backplatten.

Bei einem mit Backzangen ausgerüsteten Backofen kann erfindungsgemäß vorgesehen sein, dass mehrere Backzangen entlang einer Kreisbahn nebeneinander angeordnet und auf einem um eine vertikale Drehachse drehbaren Drehtisch befestigt sind und dass im Backraum an der Kreisbahn zumindest eine Backzone vorgesehen ist, in der sowohl oberhalb als auch unterhalb der Kreisbahn jeweils zumindest ein langgestreckter, bogenförmiger Induktor angeordnet ist, der sich längs der Kreisbahn über mehrere Backzangen erstreckt und ein sich längs dem Induktor erstreckendes Magnetfeld erzeugt, das die Suszeptorplatten von mehreren Backzangen gleichzeitig berührungsfrei induktiv erwärmt.

Bei einem mit Backzangen ausgerüsteten Backofen kann weiters erfindungsgemäß vorgesehen sein, dass die Backzangen entlang einer Umlaufbahn angeordnet sind, die im Backraum durch zwei übereinander angeordnete, horizontale Transportbahnen führt, und dass an beiden Transportbahnen eine Backzone vorgesehen ist, in der sowohl oberhalb als auch unterhalb der Transportbahn jeweils zumindest ein langgestreckter Induktor angeordnet ist, der sich längs der Umlaufbahn der Backzangen über mehrere Backzangen erstreckt und ein sich längs dem Induktor erstreckendes Magnetfeld erzeugt, das die Suszeptorplatten von mehreren Backzangen gleichzeitig berührungsfrei induktiv erwärmt.

Weiters kann erfindungsgemäß vorgesehen sein, dass bei den Backzangen der obere Zangenteil über ein Scharnier mit dem unteren Zangenteil schwenkbar verbunden ist und dass die Suszeptorplatten in beiden Zangenteilen jeweils zwischen zwei an die Suszeptorplatten seitlich anschließenden Randstücken angeordnet sind, wobei die auf der Scharnierseite der Backzange angeordneten Randstücke der beiden Zangenteile durch das Scharnier miteinander verbunden sind und das am freien Ende des oberen Zangenteiles angeordnete Randstück die Steuerrolle zum Öffnen und Schließen der Backzange trägt.

Gemäß einem weiteren Merkmal der Erfindung können bei den Backzangen die Suszeptorplatten gegenüber den Randstücken der beiden Zangenteile elektrisch isoliert sein. Diese Ausbildung erlaubt es, die induktive Erwärmung in beiden Zangenteilen der Backzangen auf die als Suszeptorplatten ausgebildeten Backplatten zu beschränken.

Gemäß einem weiteren Merkmal der Erfindung kann bei den Backzangen auf dem vom Scharnier abgewandten Seitenrand der Backzange eine Backzangenverriegelungsvorrichtung vorgesehen sein, deren Verriegelungselemente an jenen Randstücken der beiden Zangenteile angebracht sind, welche auf dem vom Scharnier abgewandten Seitenrand der Backzange neben den Suszeptorplatten angeordnet sind.

Gemäß einem weiteren Merkmal der Erfindung können bei den Backzangen beide Zangenteile mit flachen Plattenrahmen versehen sein, in denen die Suszeptorplatten mit freiliegenden Rückseiten angeordnet sind.

Erfindungsgemäß können die flachen Plattenrahmen zu beiden Seiten der Suszeptorplatten angeordnete, seitliche Rahmenteile besitzen, die durch einen entlang dem vorderen Rand der Suszeptorplatte angeordneten, vorderen Querholm und durch einen entlang dem hinteren Rand der Suszeptorplatte angeordneten, hinteren Querholm miteinander verbunden sind.

Erfindungsgemäß können die Suszeptorplatten in den flachen Plattenrahmen jeweils schwimmend gelagert bzw. senkrecht zur Plattenebene begrenzt verschiebbar angeordnet sein. Diese Ausbildung erlaubt es, dass der in der geschlossenen Backzange zwischen den beiden Suszeptorplatten angeordnete, sich zu Beginn des Backprozesses ausdehnende Teig die im oberen Zangenteil angeordnete Suszeptorplatte trotz geschlossener Backzange anhebt.

Erfindungsgemäß können die Suszeptorplatten in den Querholmen der flachen Plattenrahmen senkrecht zur Plattenebene begrenzt verschiebbar angeordnet sein.

Bei den flachen Plattenrahmen der oberen und unteren Zangenteile können die beiden Querholme gegenüber den beiden seitlichen Rahmenteilen elektrisch isoliert sein. Diese Ausbildung erlaubt es, die induktive Erwärmung auf die in den flachen Plattenrahmen angeordneten, als Suszeptorplatten ausgebildeten Backplatten zu beschränken.

Gemäß einem weiteren Merkmal der Erfindung können die Suszeptorplatten in sie eingebettete, als Backformhälften ausgebildete Einsätze enthalten. Dabei können die Suszeptorplatten aus Gusseisen oder Stahl und die als Backformhälften ausgebildeten Einsätze aus Aluminium bestehen.

In einer weiteren Ausgestaltung der Erfindung wird ein neuer Backofen vorgeschlagen, bei dem entlang von zwei durch den Backraum führenden Umlaufbahn angeordnete, jeweils als Suszeptorplatten ausgebildete, in zwei getrennten Kettenförderern angeordnete, obere und untere Backplatten vorgesehen sind. Die beiden Umlaufbahnen besitzen jeweils einen von der Eingabestation durch den Backraum zur Ausgabestation führenden, entlang einer Backstrecke angeordneten Backabschnitt und einen von der Ausgabestation zurück zur Eingabestation führenden Rücklaufabschnitt. Die in den Backabschnitten der beiden Umlaufbahnen entlang der Backstrecke angeordneten Suszeptorplatten liegen einander gegenüber und bilden Backformen, die jeweils aus einer oberen und einer unteren Backplatte bestehen. Im Backraum ist zumindest eine Backzone vorgesehen, in der oberhalb und unterhalb der entlang der Backstrecke angeordneten Backformen jeweils zumindest ein langgestreckter Induktor angeordnet ist, der sich längs der Backstrecke über mehrere Backformen erstreckt und ein sich längs dem Induktor erstreckendes Magnetfeld erzeugt, das die Suszeptorplatten von mehreren Backformen gleichzeitig berührungsfrei induktiv erwärmt.

Bei diesem Backofen entstehen die gebackenen Formkörper in den entlang der Backstrecke hintereinander angeordneten Backformen.

Bei einem solchen Backofen können die Backabschnitte der beiden Umlaufbahnen entlang einer Backstrecke angeordnete sein, die im Backraum durch zwei übereinander angeordnete horizontale Transportbahnen führt, an denen jeweils eine Backzone vorgesehen ist, in der sowohl oberhalb als auch unterhalb der Backformen jeweils zumindest ein langgestreckter Induktor angeordnet ist, der mit seinem Magnetfeld die Suszeptorplatten von mehreren Backformen gleichzeitig berührungsfrei induktiv erwärmt.

Gemäß einem weiteren Merkmal der Erfindung kann ein Backofen vorgesehen sein, bei welchem die als Suszeptorplatten ausgebildeten, oberen und unteren Backplatten entlang von zwei Umlaufbahnen angeordnet sind, bei denen die Backabschnitte entlang einer horizontalen Backstrecke angeordnet sind, und bei welchem im Backraum eine sich längs der horizontalen Backstrecke erstreckende Backzone vorgesehen ist, die zumindest einen über den Backformen angeordneten, langgestreckten, oberen Induktor und zumindest einen unterhalb der Backformen angeordneten, langgestreckten, unteren Induktor umfasst.

Bei einem solchen Backofen kann weiters erfindungsgemäß vorgesehen sein, dass die oberen Backplatten entlang einer oberen Umlaufbahn angeordnet sind und an einem oberen Kettenförderer mit ihren Backflächen nach unten weisend, frei pendelnd aufgehängt sind, dass die unteren Backplatte entlang einer unteren Umlaufbahn angeordnet sind und von einem unteren Kettenförderer durch die Backstrecke befördert werden, dass die oberen Backplatten vom oberen Kettenförderer am Beginn der Backstrecke auf den unteren Backplatten abgesetzt und am Ende der Backstrecke von den unteren Backplatten abgehoben werden, und dass der untere Kettenförderer die jeweils aus einer unteren Backplatte und einer auf dieser abgesetzten oberen Backplatte bestehenden Backformen entlang der Backstrecke durch die Backzone befördert.

Bei einem Backofen, bei dem die unteren Backplatten in einer Umlaufbahn angeordnet sind, die einen von der Eingabestation durch den Backraum zur Ausgabestation führenden, entlang einer Backstrecke angeordneten Backabschnitt und einen von der Ausgabestation zurück zur Eingabestation führenden Rücklaufabschnitt besitzt, kann erfindungsgemäß vorgesehen sein, dass die Induktionsheizung an der Umlaufbahn der unteren Backplatten am Rücklaufabschnitt zumindest einen zusätzlichen, langgestreckten Induktor vorsieht, der mit seinem Magnetfeld die Suszeptorplatten von mehreren unteren Backplatten gleichzeitig berührungsfrei induktiv erwärmt.

Bei einem Backofen, bei dem die oberen Backplatten in einer Umlaufbahn angeordnet sind, die einen von der Eingabestation durch den Backraum zur Ausgabestation führenden, entlang einer Backstrecke angeordneten Backabschnitt und einen von der Ausgabestation zurück zur Eingabestation führenden Rücklaufabschnitt besitzt, kann erfindungsgemäß vorgesehen sein, dass die Induktionsheizung an der Umlaufbahn der oberen Backplatten am Rücklaufabschnitt zumindest einen zusätzlichen, langgestreckten Induktor vorsieht, der mit seinem Magnetfeld die Suszeptorplatten von mehreren oberen Backplatten gleichzeitig berührungsfrei induktiv erwärmt.

Gemäß einem weiteren Merkmal der Erfindung können bei einem Backofen, bei dem die als Suszeptorplatten ausgebildeten, oberen und unteren Backplatten in zwei getrennten Kettenförderern angeordnet sind, zumindest die unteren Backplatten gegenüber dem entlang ihrer Umlaufbahn angeordneten Kettenförderer elektrisch isoliert sein. Erfindungsgemäß können auch die oberen Backplatten gegenüber dem entlang ihrer Umlaufbahn angeordneten Kettenförderer elektrisch isoliert sein.

Die Backöfen sind mit einer Induktionsheizung versehen. Bei dieser Induktionsheizung ist erfindungsgemäß vorgesehen, dass in jeder Backzone ein sich längs der Umlaufbahn der Backplatten über mehrere Backplatten erstreckender, langgestreckter Induktor angeordnet ist, der ein breites Magnetfeld erzeugt, das sich längs der Umlaufbahn der Backplatten über mehrere Backplatten erstreckt und mehrere als Suszeptorplatten ausgebildete Backplatten gleichzeitig berührungsfrei induktiv erwärmt.

Erfindungsgemäß kann der langgestreckte Induktor zwei oder mehrere, nebeneinander angeordnete, sich längs der Umlaufbahn der Backplatten über mehrere Backplatten erstreckende, parallel zueinander verlaufende Induktorstäbe umfassen.

Gemäß einem weiteren Merkmal der Erfindung kann der langgestreckte Induktor einzelne, parallel zueinander verlaufende und jeweils eine eigene Induktorschleife bildende Induktorstäbe umfassen. Bei dieser Ausbildung ist jeder Induktorstab über eine eigene Stromleitung mit dem Wechselstromgenerator der Induktionsheizung verbunden.

Gemäß einem weiteren Merkmal der Erfindung kann der langgestreckte Induktor nebeneinander angeordnete, jeweils eine eigene Induktorschleife bildende, U-förmige Induktoren umfassen, die jeweils zwei parallel zueinander verlaufende Induktorstäbe aufweisen. Bei dieser Ausbildung ist jeder U-förmige Induktor über eine eigene Stromleitung mit dem Wechselstromgenerator der Induktionsheizung verbunden.

Gemäß einem weiteren Merkmal der Erfindung kann der langgestreckte Induktor zwei nebeneinander angeordnete, jeweils eine eigene Induktorschleife bildende Induktoren umfassen, bei denen die parallel zueinander verlaufenden Induktorstäbe an ihren Enden durch Querstäbe verbunden sind und zusammen mit diesen eine in Längsrichtung des Induktors langgestreckte Spirale bilden. Bei dieser Ausbildung sind die beiden nebeneinander angeordneten Induktoren jeweils über eine eigene Stromleitung mit dem Wechselstromgenerator der Induktionsheizung verbunden.

Gemäß einem weiteren Merkmal der Erfindung kann der langgestreckte Induktor als eine einzelne Induktorschleife ausgebildet sein, wobei seine parallel zueinander verlaufenden Induktorstäbe an ihren Enden durch Querstäbe verbunden sind und zusammen mit diesen eine in Längsrichtung des Induktors langgestreckte Spirale bilden. Bei dieser Ausbildung ist der langgestreckte Induktor über nur eine Stromleitung mit dem Wechselstromgenerator der Induktionsheizung verbunden.

Gemäß einem weiteren Merkmal der Erfindung kann der langgestreckte Induktor als eine einzelne Induktorschleife ausgebildet sein, die zwei nebeneinander angeordnete Halbschleifen enthält, bei denen die parallel zueinander verlaufenden Induktorstäbe an ihren Enden durch Querstäbe verbunden sind und zusammen mit diesen jeweils eine in Längsrichtung des Induktors langgestreckte Spirale bilden. Bei dieser Ausbildung ist der langgestreckte Induktor über nur eine Stromleitung mit dem Wechselstromgenerator der Induktionsheizung verbunden.

Gemäß einem weiteren Merkmal der Erfindung können die Induktorstäbe mit den sie verbindenden Querstäben bei der einen Halbschleife eine im Uhrzeigersinn verlaufende Spirale und bei der anderen Halbschleife eine gegen den Uhrzeigersinn verlaufende Spirale bilden.

Gemäß einem weiteren Merkmal der Erfindung können die Induktorstäbe mit den sie verbindenden Querstäben bei beiden Halbschleifen gleichsinnig verlaufende Spiralen bilden.

Gemäß einem weiteren Merkmal der Erfindung kann der langgestreckte Induktor als eine einzelne Induktorschleife ausgebildet sein, wobei seine parallel zueinander verlaufenden Induktorstäbe an ihren Enden durch Querstäbe abwechselnd miteinander verbunden sind und zusammen mit den Querstäben ein Mäandermuster bilden, bei dem die Mäanderschleifen quer zur Längsrichtung des Induktors aufeinanderfolgen.

Gemäß einem weiteren Merkmal der Erfindung können als Induktorstäbe, die sich längs der Umlaufbahn der Backplatten über mehrere Backplatten erstrecken, jeweils mit einem niedrigen, rechteckigen Vollquerschnitt versehene, massive Stäbe vorgesehen sein, die mit ihren Breitseiten den als Suszeptorplatten ausgebildeten Backplatten zugewandt sind.

Bei der erfindungsgemäßen Induktionsheizung sind Induktorstäbe vorgesehen, die sich längs der Umlaufbahn der Backplatten über mehrere Backplatten erstrecken. Die Induktorstäbe sind dem Verlauf der Umlaufbahn der Backplatten entsprechend als gerade Stäbe oder als bogenförmig gekrümmte Stäbe ausgebildet.

Ein weiteres Merkmal der Erfindung sieht vor, dass jeder Induktor am Gestell des Backofens elektrisch isoliert befestigt ist.

Ein weiteres Merkmal der Erfindung sieht vor, dass jeder Induktor mit seinen Induktorstäben am Gestell des Backofens elektrisch isoliert befestigt ist.

Ein Merkmal der Erfindung sieht vor, dass jeder sich längs der Umlaufbahn der Backplatten über mehrere Backplatten erstreckende Induktor im Backofen horizontal angeordnet und am Gestell des Backofens vertikal verstellbar befestigt ist.

Ein weiteres Merkmal der Erfindung sieht vor, dass jeder Induktor im Backofen in einem vertikalen Abstand zur Umlaufbahn der als Suszeptorplatten ausgebildeten Backplatten angeordnet ist, welcher kleiner ist, als die vertikale Reichweite des vom Induktor erzeugten Magnetfeldes.

Ein weiteres Merkmal der Erfindung sieht vor, dass jeder Induktor in einem Abstand parallel zur Umlaufbahn der als Suszeptorplatten ausgebildeten Backplatten angeordnet ist, welcher kleiner ist, als die Reichweite des vom Induktor erzeugten Magnetfeldes.

Nachstehend wird die Erfindung an einigen Ausführungsbeispielen anhand der Zeichnungen näher erläutert.

### Kurze Beschreibung der Zeichnungen

Fig. 1 zeigt einen mit Backzangen ausgerüsteten Backofen von der Seite,
Fig. 2 zeigt eine Draufsicht auf den Backofen von Fig. 1,
Fig. 3 zeigt einen Querschnitt des Backraumes des Backofens von Fig. 1,
Fig. 4 zeigt eine Backzange des Backofens von Fig. 1 in Draufsicht,
Fig. 5 zeigt die Backzange der Fig. 4 von hinten,
Fig. 6 zeigt den linken Seitenrand der Backzange von Fig. 4,
Fig. 7 zeigt den mittleren Teil der Backzange von Fig. 4,
Fig. 8 zeigt den rechten Seitenrand der Backzange von Fig. 4,
Fig. 9 zeigt die Backzange von Fig. 4 im Längsschnitt,
Fig. 10 zeigt einen am Ofengestell befestigten, oberen Induktor,
Fig. 11 zeigt eine Befestigungsvorrichtung für einen Induktorstab,
Fig. 12 zeigt einen am Ofengestell befestigten, unteren Induktor,
Fig. 13 bis 17 zeigen verschiedene Bauformen von Induktoren in Draufsicht,
Fig. 18 zeigt einen weiteren mit Backzangen ausgerüsteten Backofen von der Seite,
Fig. 19 zeigt eine Draufsicht auf den Backofen von Fig. 18,
Fig. 20 zeigt einen Querschnitt des Backraumes des Backofens von Fig. 18,
Fig. 21 zeigt die linke Hälfte einer Backzange vom Backofen der Fig. 18 ,
Fig. 22 zeigt die rechte Hälfte einer Backzange vom Backofen der Fig. 18 ,
Fig. 23 zeigt einen weiteren mit Backzangen ausgerüsteten Backofen in Draufsicht,
Fig. 24 zeigt einen Querschnitt des Backraumes des Backofens von Fig. 23,
Fig. 25 zeigt die Befestigung des oberen Induktors beim Backofen von Fig. 23,
Fig. 26 zeigt die Befestigung des unteren Induktors beim Backofen von Fig. 23,
Fig. 27 zeigt die Befestigung eines Induktorstabes beim Backofen von Fig. 23
Fig. 28 zeigt einen weiteren erfindungsgemäßen Backofen von der Seite,
Fig. 29 zeigt einen Querschnitt des Backofens von Fig. 28
Fig. 30 zeigt den linken Seitenrand einer Backform des Backofens von Fig. 28,
Fig. 31 zeigt ein Detail des oberen Backplattenförderers des Backofens von Fig. 28,
Fig. 32 zeigt einen weiteren erfindungsgemäßen Backofen von der Seite,
Fig. 33 zeigt einen Backraum des Backofens von Fig. 32 im Querschnitt,
Fig. 34 zeigt ein Detail eines Backplattenförderers des Backofens von Fig. 33, und
Fig. 35 zeigt einen weiteren erfindungsgemäßen Backofen in Draufsicht.

### Beschreibung von Ausführungsbeispielen

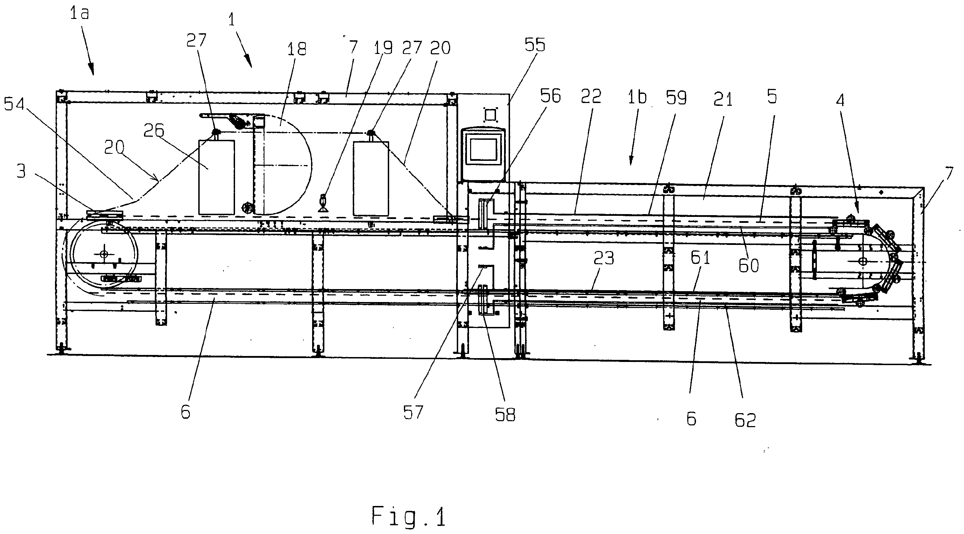

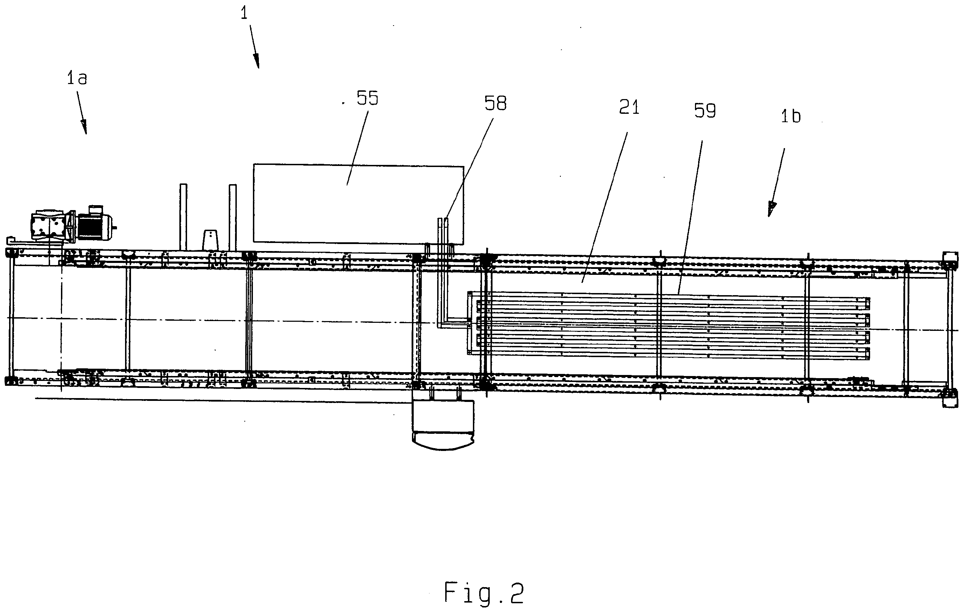

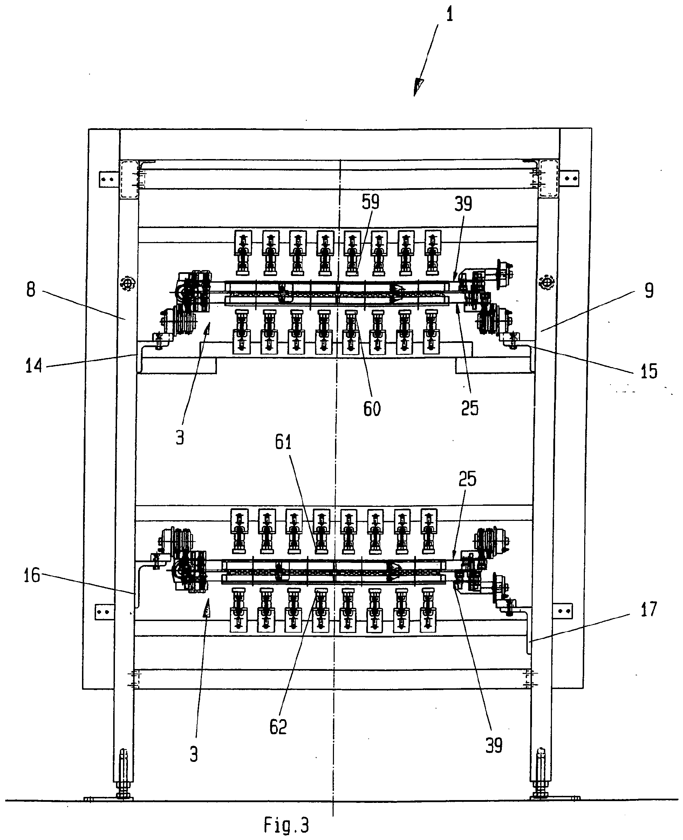

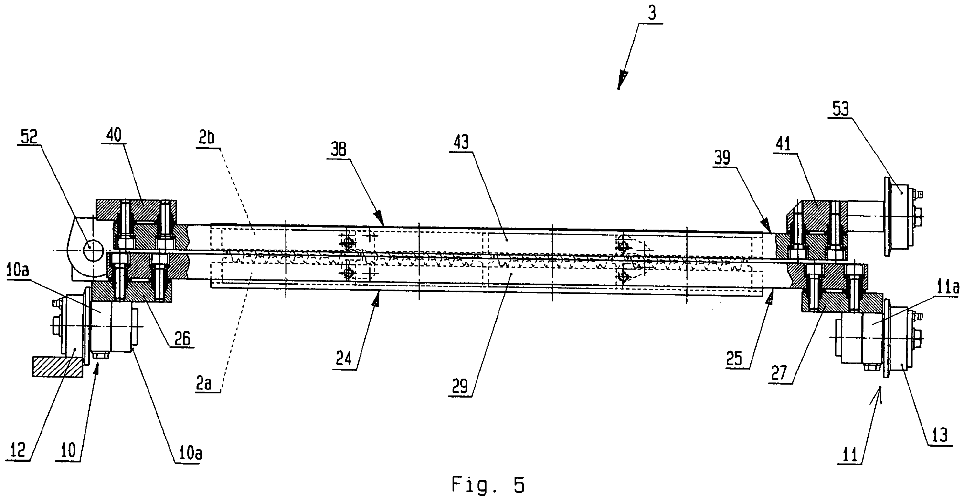

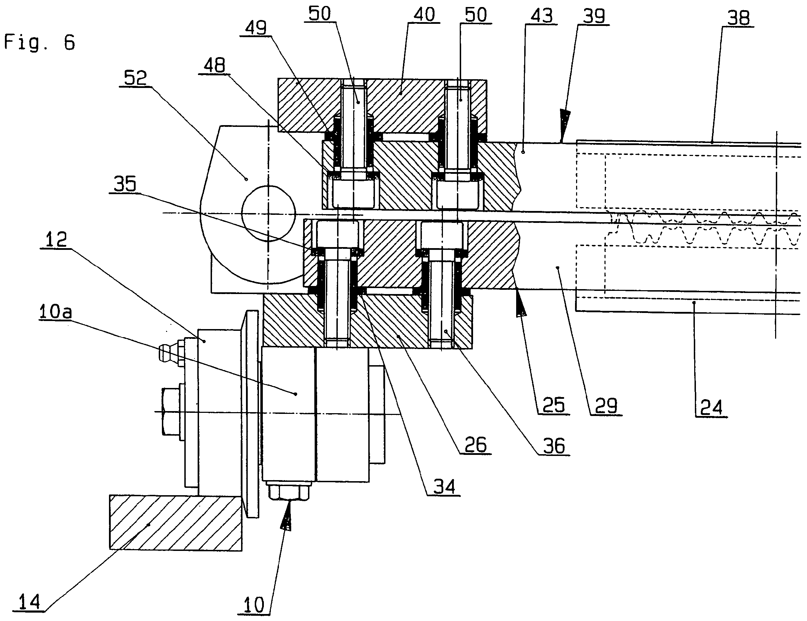

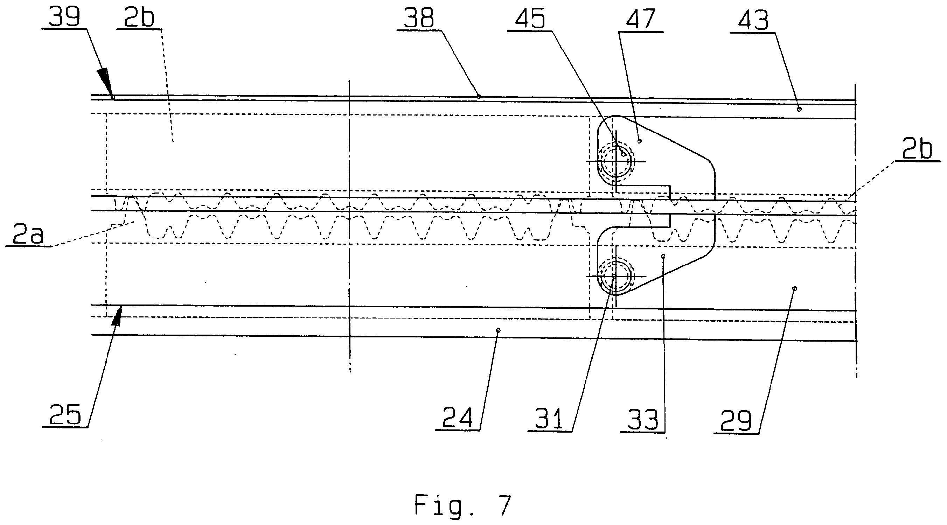

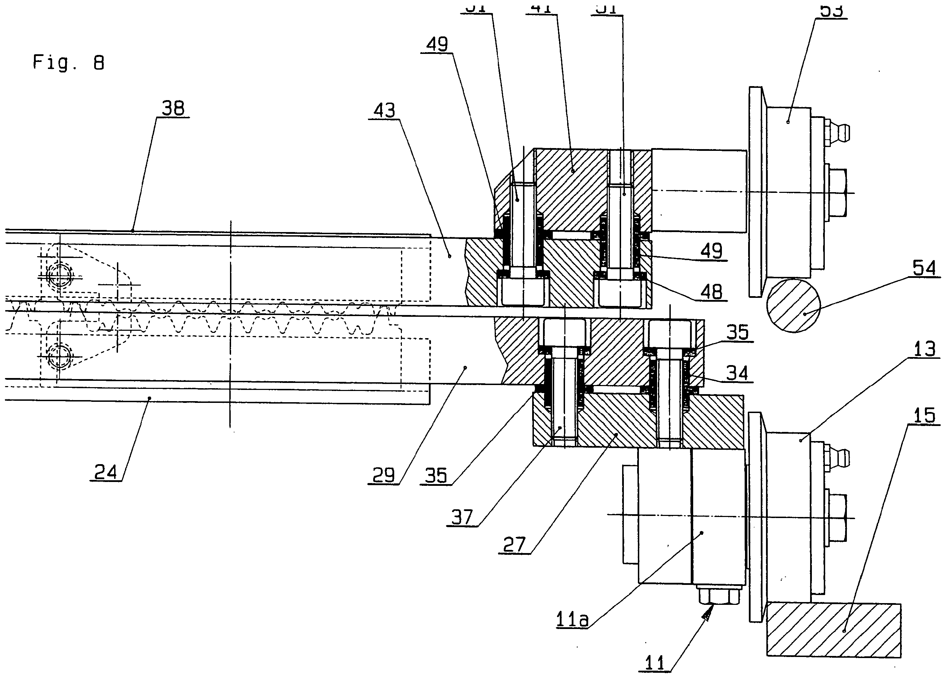

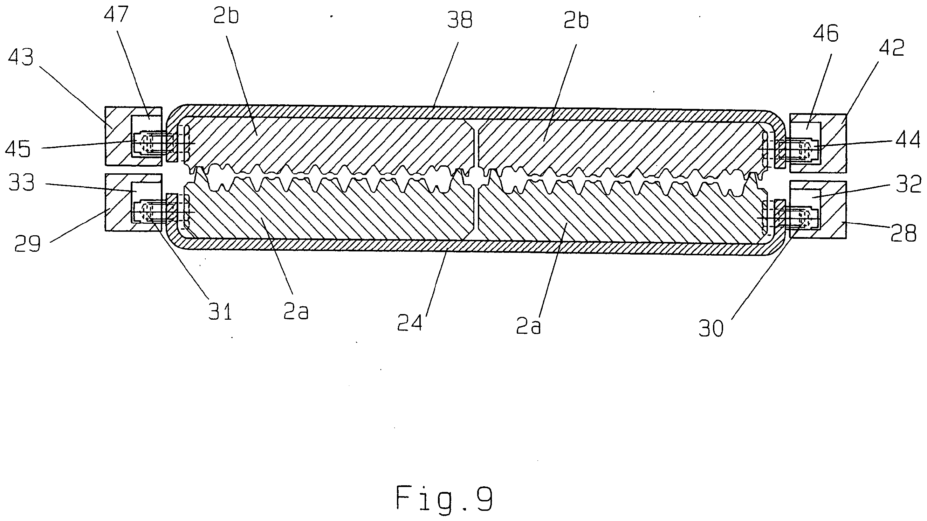

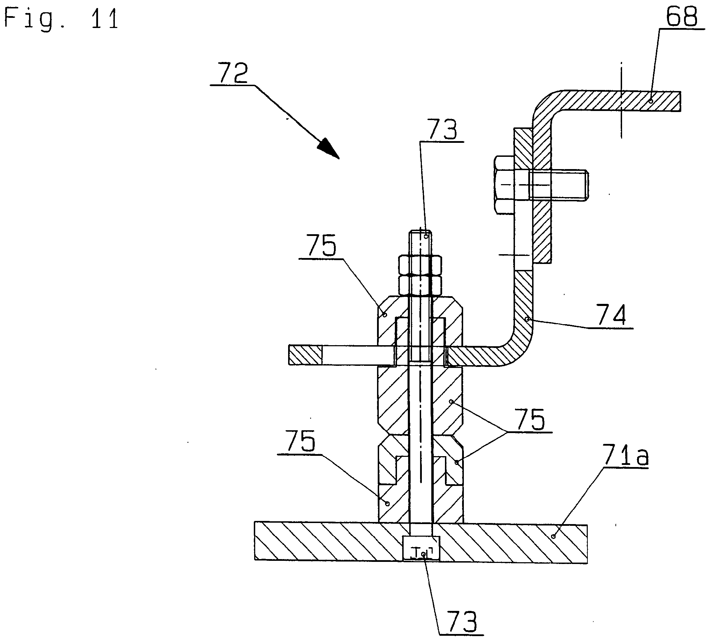

Die Fig. 1 bis 12 zeigen einen Backofen 1 zur Herstellung von gebackenen Formkörpern, die als runde, weiche Waffeln ausgebildet sind. Die weichen Waffeln werden aus einem flüssigen Waffelteig in Backformen 2 hergestellt, die jeweils aus einer unteren Backform 2a, und einer oberen Backform 2b bestehen.

Die Backformen 2 sind in den Backzangen 3 einer endlosen Backzangenkette 4 aufgenommen. Die Backzangenkette 4 ist entlang einer Umlaufbahn angeordnet, die sich in zwei übereinander angeordneten, horizontalen Transportbahnen 5, 6 durch den Backofen 1 erstreckt. Die Backzangenkette 4 ist in einen entlang der Umlaufbahn angeordneten Kettenförderer integriert, der die Backzangen 3 durch beide Transportbahnen 5, 6 befördert und über seine am vorderen und hinteren Ende des Backofens 1 angeordneten Kettenräder von einer Transportbahn in die andere umlenkt.

Der Kettenförderer ist im langgestreckten Gestell 7 des Backofens 1 zwischen den beiden Seitenwänden 8,9 des Ofengestells 7 angeordnet. Die Backzangen 3 sind im Kettenförderer zwischen zwei seitlichen Transportketten 10, 11 angeordnet und an deren Kettenlaschen 10a, 11a befestigt. Von den Transportketten 10, 11 stehen nach außen Gelenksbolzen vor, an denen Laufräder 12, 13 drehbar gelagert sind, mit denen sich der Kettenförderer in beiden Transportbahnen 5, 6 jeweils auf in Ofenlängsrichtung verlaufenen Laufschienen 14, 15, 16, 17 abstützt, die an den beiden Seitenwänden 8, 9 des Ofengestells 7 befestigt sind.

In der vorderen Ofenhälfte la sind an der oberen Transportbahn 5 eine Ausgabestation 18, eine Eingabestation 19 und eine Einrichtung 20 zum Öffnen und Schließen der Backzangen 3 angeordnet. In der Ausgabestation 18 werden die weichen Waffeln aus den geöffneten Backzangen 3 entnommen. In der Eingabestation 19 wird flüssiger Waffelteig in die geöffneten Backzangen 3 eingebracht. Nach der Eingabestation 19 werden die Backzangen 3 durch die Einrichtung 20 geschlossen. Die geschlossenen Backzangen 3 werden vom Kettenförderer in der oberen Transportbahn 5 nach hinten zum hinteren Ende des Backofens 1 und in der unteren Transportbahn 6 nach vorne zum vorderen Ende des Backofens 1 befördert.

In der hinteren Ofenhälfte 1b ist der Backraum 21 des Backofens 1 untergebracht. Im Backraum 21 ist an der oberen Transportbahn 5 eine obere Backzone 22 und an der unteren Transportbahn 6 eine untere Backzone 23 angeordnet.

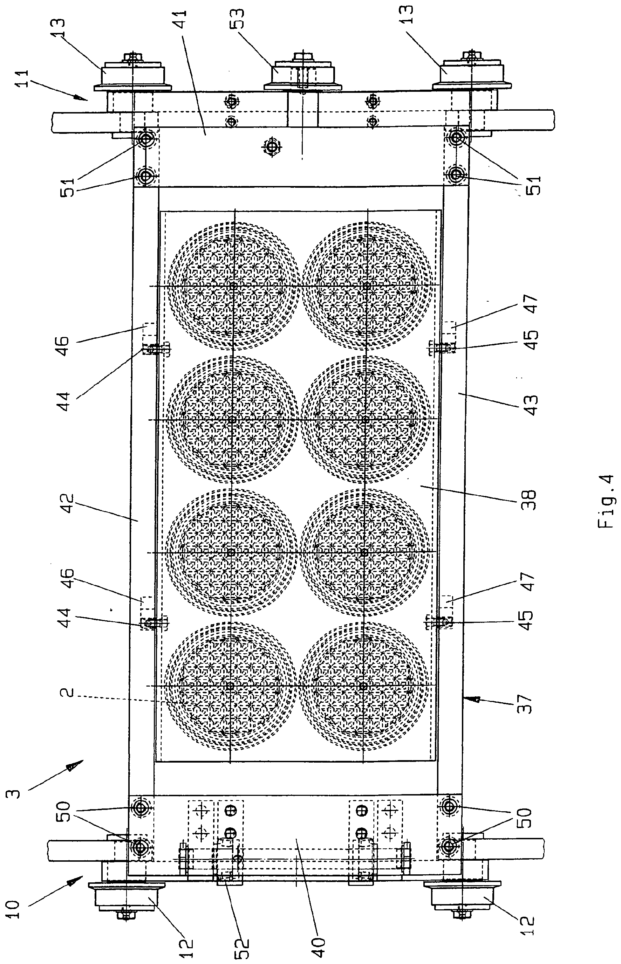

Die Fig. 4-9 zeigen eine Backzange 3 des Backofen 1.

Jede Backzange 3 enthält in ihrem unteren Zangenteil eine berührungsfrei induktiv erwärmbare, untere Backplatte. Diese ist als Suszeptorplatte 24 ausgebildet und enthält mehrere untere Backformen 2a. Die Suszeptorplatte 24 ist im unteren Zangenteil in einem flachen, unteren Plattenrahmen 25 aufgenommen. Der untere Plattenrahmen 25 besitzt zwei seitliche Rahmenteile 26, 27, zwischen denen die Suszeptorplatte 24 angeordnet ist. Die beiden seitlichen Rahmenteile 26, 27 sind durch einen entlang dem vorderen Rand der Suszeptorplatte 24 angeordneten, vorderen Querholm 28 und durch einen entlang dem hinteren Rand der Suszeptorplatte 24. angeordneten, hinteren Querholm 29 miteinander verbunden. Die Suszeptorplatte 24 ist in den Querholmen 28, 29 des unteren Plattenrahmens 25 schwimmend bzw. senkrecht zur Plattenebenen begrenzt beweglich gelagert. Die Lagerung besteht aus am vorderen bzw. hinteren Rand der Suszeptorplatte 24 horizontal abstehenden Bolzen 30, 31, die bei den Querholmen 28, 29 in an deren Innenseiten angeordneten Vertiefungen 32, 33 aufgenommen sind. Die Ränder dieser Vertiefungen 32, 33 sind als Führungskulissen für die Bolzen 30, 31 ausgebildet. An den seitlichen Enden der Querholme 28, 29 sind zwischen ihnen und den seitlichen Rahmenteilen 26, 27 elektrisch isolierende Zwischenlagen 34, 35 angeordnet, die einen metallischen Kontakt zwischen den Querholmen 28, 29 und den seitlichen Rahmenteilen 26, 27 verhindern. Die Querholme 28, 29 sind an ihren Enden über Befestigungsschrauben 36, 37 mit den seitlichen Rahmenteilen 26, 27 starr verbunden. Bei jeder Befestigungsschraube 36, 37 ist an der Unterseite des Schraubenkopfes eine Beilagscheibe 34 angeordnet und rundum den Schraubenschaft ist eine zylindrische Hülse 35 angeordnet, von der ein ringförmiger Flansch nach außen absteht, der zwischen der Unterseite des Querholms 28, 29 und der Oberseite des seitlichen Rahmenteiles 26, 27 angeordnet ist. Die Beilagscheiben 34 und die Hülsen 35 sind aus einem elektrisch isolierenden Material hergestellt.

Jede Backzange 3 enthält in ihrem oberen Zangenteil eine berührungsfrei induktiv erwärmbare, obere Backplatte. Diese ist als Suszeptorplatte 38 ausgebildet und enthält mehrere obere Backformen 2b. Die Suszeptorplatte 38 ist im oberen Zangenteil in einem flachen, oberen Plattenrahmen 39 aufgenommen. Der obere Plattenrahmen 39 weist zwei seitliche Rahmenteile 40, 41 auf, zwischen denen die Suszeptorplatte 38 angeordnet ist. Die beiden seitlichen Rahmenteile 40, 41 sind durch einen entlang dem vorderen Rand der Suszeptorplatte 38 angeordneten, vorderen Querholm 42 und durch einen entlang dem hinteren Rand der Suszeptorplatte 38 angeordneten, hinteren Querholm 43 miteinander verbunden. Die Suszeptorplatte 38 ist in den Querholmen 42, 43 des oberen Plattenrahmen 39 schwimmend bzw. senkrecht zur Plattenebenen begrenzt beweglich gelagert. Die Lagerung besteht aüs am vorderen bzw. hinteren Rand der Suszeptorplatte 38 horizontal abstehenden Bolzen 44, 45, die in an den Innenseiten der Querholme 42, 43 angeordneten Vertiefungen 46, 47 aufgenommen sind. Die Ränder dieser Vertiefungen 46, 47 sind als Führungskulissen für die Bolzen 44, 45 ausgebildet. An den seitlichen Enden der Querholme 42, 43 sind zwischen ihnen und den seitlichen Rahmenteilen 40, 41 elektrisch isolierende Zwischenlagen 48, 49 angeordnet, die einen metallischen Kontakt zwischen den Querholmen 42, 43 und den seitlichen Rahmenteilen 40, 41 verhindern. Die Querholme 42, 43 sind an ihren Enden über Befestigungsschrauben 50, 51 mit den seitlichen Rahmenteilen 40, 41 starr verbunden. Bei jeder Befestigungsschraube 50, 51 ist an der Unterseite des Schraubenkopfes eine Beilagscheibe 48 angeordnet und rundum den Schraubenschaft ist eine zylindrische Hülse 49 angeordnet, von der ein ringförmiger Flansch nach außen absteht, der zwischen der Unterseite des Querholms 42, 43 und der Oberseite des seitlichen Rahmenteiles 40, 41 angeordnet ist. Die Beilagscheiben 48 und Hülsen 49 sind aus einem elektrisch isolierenden Material hergestellt.

Bei jeder Backzange 3 ist der untere Plattenrahmen 25 mit seinen beiden seitlichen Rahmenteilen 26, 27 an Kettenlaschen 10a, 11a der seitlichen Transportketten 10, 11 des Kettenförderers befestigt. Die Zangenteile sind über eine Scharnier 52 miteinander schwenkbar verbunden. Das Scharnier 52 verbindet den linken, seitlichen Rahmenteil 26 des unteren Plattenrahmens 25 mit dem linken, seitlichen Rahmenteil 40 des oberen Plattenrahmens 39. Der obere Plattenrahmen 39 trägt an seinem rechten, seitlichen Rahmenteil 41 eine Steuerrolle 53, mit deren Hilfe die Backzange 3 durch Verschwenken des oberen Zangenteiles geöffnet und geschlossen wird. Bei geschlossener Backzange 3 liegt die beiden im oberen bzw. unteren Zangenteil angeordneten Suszeptorplatten 24, 38 horizontal ausgerichteten übereinander.

Die Backzangen 3 werden im vorderen Abschnitt der oberen Transportbahn 5 beim Passieren der Einrichtung 20 geöffnet und geschlossen. Die Einrichtung 20 sieht eine Führungsstange 54 für die Steuerrollen 53 der Backzangen 3 vor. Die Führungsstange 54 ist entlang der oberen Transportbahn 5 angeordnet. Die Backzangen 3 werden durch die an der Führungsstange 54 entlanglaufenden Steuerrollen 53 geöffnet und geschlossen. Die Führungsstange 54 sieht einen ansteigenden Abschnitt zum Öffnen der Backzangen 3, einen horizontal verlaufenden, oberen Abschnitt zum Offenhalten der Backzangen 3 und einen abfallenden Abschnitt zum Schließen der Backzangen 3 vor.

Der Backofen 1 ist mit einer Induktionsheizung versehen, bei der ein neben der vorderen Ofenhälfte 1a angeordneter Wechselstromgenerator 55 über Stromleitungen 56, 57, 58 mit langgestreckten, oberen und unteren Induktoren 59, 60, 61, 62 verbunden ist und diese mit Strom versorgt.

In der oberen Backzone 22 ist ein langgestreckter, oberer Induktor 59 über den Backzangen 3 und ein langgestreckter, unterer Induktor 60 unterhalb der Backzangen 3 angeordnet. Das vom oberen Induktor 59 erzeugte Magnetfeld reicht nach unten bis zu den an den Oberseiten der Backzangen 3 angeordneten, als Suszeptorplatten 38 ausgebildeten Backplatten. Diese Suszeptorplatten 38 werden durch das vom oberen Induktor 59 erzeugte Magnetfeld berührungsfrei induktiv erwärmt. Das vom unteren Induktor 60 erzeugte Magnetfeld reicht nach oben bis zu den an den Unterseiten der Backzangen 3 angeordneten, als Suszeptorplatten 24 ausgebildeten Backplatten. Diese Suszeptorplatten 24 werden durch das vom unteren Induktor 60 erzeugte Magnetfeld berührungsfrei induktiv erwärmt.

In der unteren Backzone 23 ist ein langgestreckter, oberer Induktor 61 über den Backzangen 3 und ein langgestreckter, unterer Induktor 62 unterhalb der Backzangen 3 angeordnet. Das vom oberen Induktor 61 erzeugte Magnetfeld reicht nach unten bis zu den an den Oberseiten der Backzangen 3 angeordneten, als Suszeptorplatten 24 ausgebildeten Backplatten. Diese Suszeptorplatten 24 werden durch das vom oberen Induktor 61 erzeugte Magnetfeld berührungsfrei induktiv erwärmt. Das vom unteren Induktor 62 erzeugte Magnetfeld reicht nach oben bis zu den an den Unterseiten der Backzangen 3 angeordneten, als Suszeptorplatten 38 ausgebildeten Backplatten. Diese Suszeptorplatten 38 werden durch das vom unteren Induktor 62 erzeugte Magnetfeld berührungsfrei induktiv erwärmt.

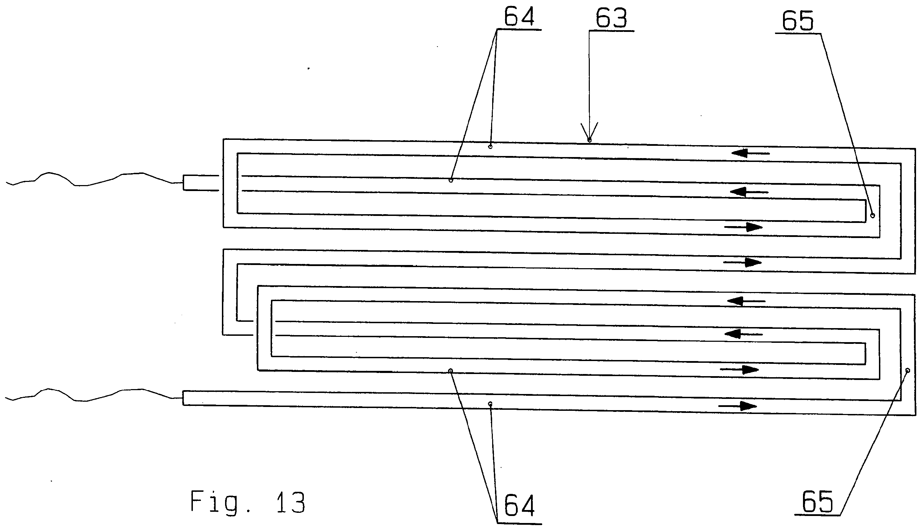

Die Induktoren 59, 60, 61, 62 erstrecken sich in der jeweiligen Backzone 22, 23 längs der Umlaufbahn der Backzangen 3 über mehrere hintereinander angeordnete Backzangen 3. Die Induktoren 59, 60, 61, 62 erzeugen jeweils ein breites Magnetfeld, das sich längs der Umlaufbahn der Backzangen 3 über mehrere hintereinander angeordnete Backzangen 3 erstreckt und bei den hintereinander angeordneten Backzangen 3 die als Suszeptorplatten 24, 38 ausgebildeten Backplatten berührungsfrei induktiv erwärmt. Die Induktoren 59, 60, 61, 62 können unterschiedliche Bauformen aufweisen. Einige dieser Bauformen sind in den Fig. 13-17 dargestellt.

Fig. 13 zeigt eine Bauform eines langgestreckten Induktors 63. Dieser besitzt langgestreckte, parallel zueinander angeordnete Induktorstäbe 64, die an ihren Enden durch Querstäbe 65 verbunden sind. Die Induktorstäbe 64 bilden zusammen mit den Querstäben 65 eine einzelne Induktorschleife. Die Induktorschleife ist an ihren beiden Enden über Stromleitungen mit dem Wechselstromgenerator der Induktionsheizung verbunden. Die Induktorschleife enthält zwei nebeneinander angeordneten Halbschleifen. Bei jeder Halbschleife sind die parallel zueinander verlaufenden Induktorstäbe 64 an ihren Enden durch Querstäbe 65 verbunden. Bei jeder Halbschleife bilden die Induktorstäbe 64 zusammen mit den sie verbindenden Querstäben 65 eine in Längsrichtung des Induktors 63 langgestreckte Spirale. Bei beiden Halbschleifen bilden die Induktorstäbe 64 zusammen mit den Querstäben 65 eine entgegen dem Uhrzeigersinn verlaufende Spirale.

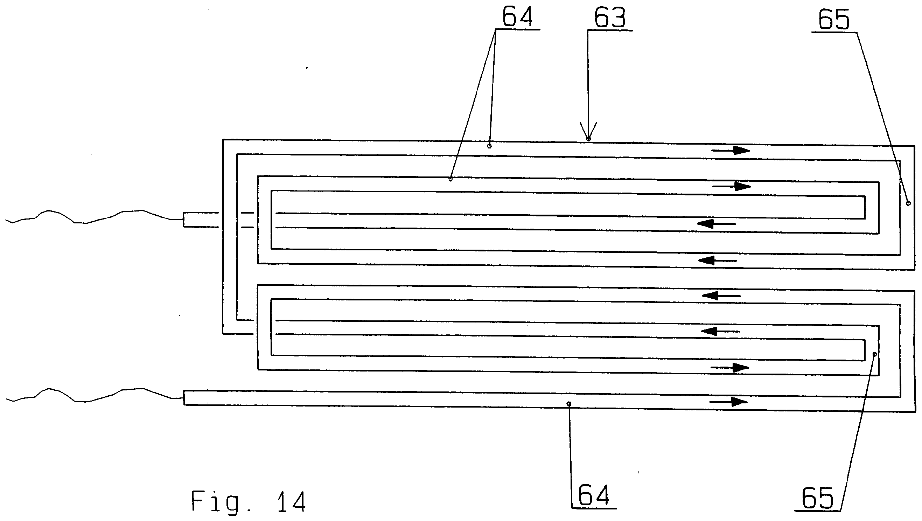

Fig. 14 zeigt eine Bauform eines langgestreckten Induktors 63, bei dem ebenfalls langgestreckte, parallel zueinander angeordnete Induktorstäbe 64 vorgesehen sind, die an ihren Enden durch Querstäbe 65 verbunden sind. Die Induktorstäbe 64 bilden zusammen mit den Querstäben 65 eine zwei Halbschleifen aufweisende Induktorschleife. Bei der in Fig. 14 unteren Halbschleife bilden die Induktorstäbe 64 zusammen mit den sie verbindenden Querstäben 65 eine in Längsrichtung des Induktors 63 langgestreckte, entgegen dem Uhrzeigersinn verlaufende Spirale. Bei der in Fig. 14 oberen Halbschleife bilden die Induktorstäbe 64 zusammen mit den sie verbindenden Querstäben 65 eine in Längsrichtung des Induktors 63 langgestreckte, im Uhrzeigersinn verlaufende Spirale.

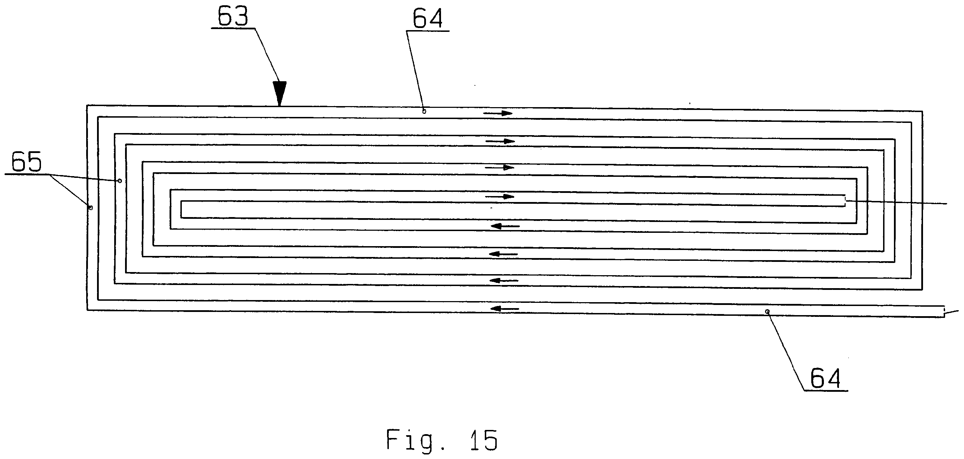

Fig. 15 zeigt eine weiter Bauform eines langgestreckten Induktors 63, bei dem langgestreckte, parallel zueinander angeordnete Induktorstäbe 64 an ihren Enden durch Querstäbe 65 verbunden sind und zusammen mit den Querstäben 65 eine einzelne Induktorschleife bilden. Beim Induktor der Fig. 15 bilden alle nebeneinander angeordneten Induktorstäbe 64 zusammen mit den sie verbindenden Querstäben 65 eine einzige in Längsrichtung des Induktors 63 langgestreckte, im Uhrzeigersinn verlaufende Spirale.

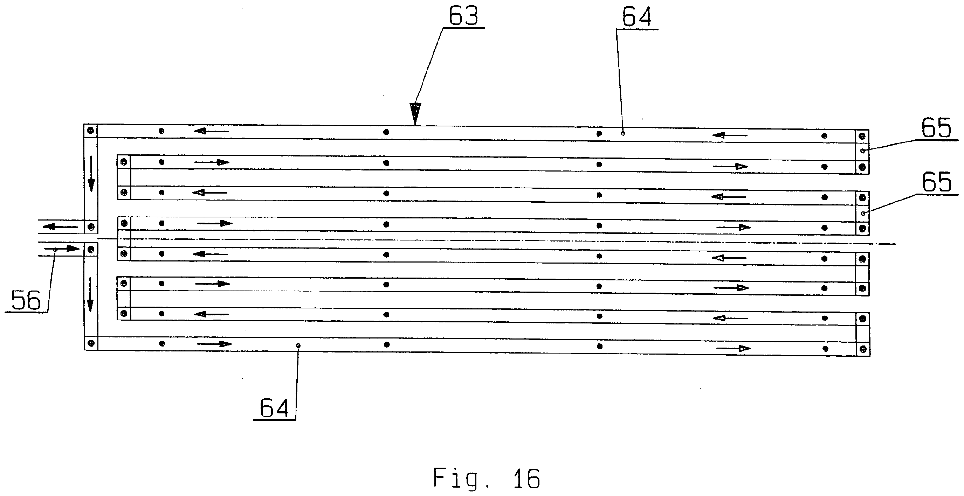

Fig. 16 zeigt eine weiter Bauform eines langgestreckten Induktors 63. Bei diesem sind die parallel zueinander verlaufenden Induktorstäbe 64 an ihren Enden abwechselnd durch Querstäbe 65 miteinander verbunden. Die Induktorstäbe 64 bilden zusammen mit den Querstäben 65 ein Mäandermuster, bei dem die Mäanderschleifen quer zur Längsrichtung des Induktors - in Fig. 16 von unten nach oben - aufeinanderfolgen.

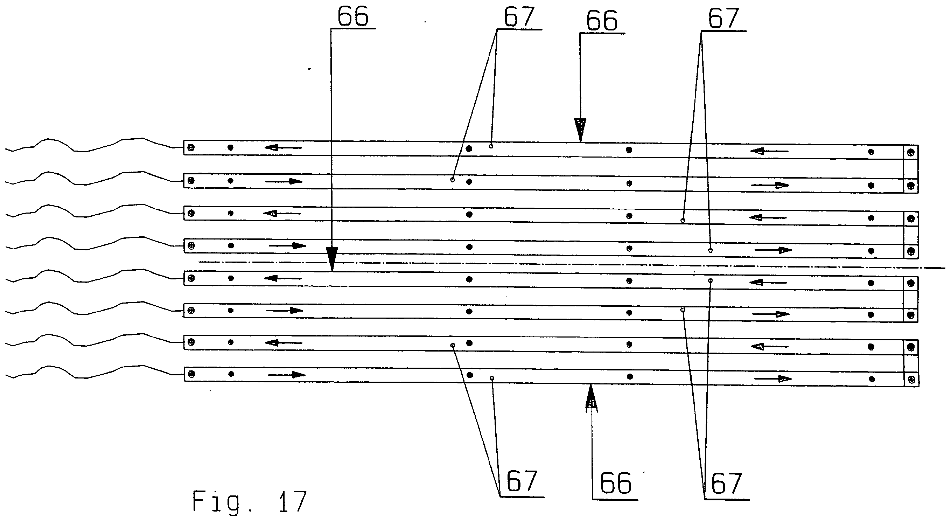

Fig. 17 zeigt eine weiter Bauform eines langgestreckten Induktors 63. Bei diesem sind mehrere, nebeneinander angeordnete und jeweils eine eigene Induktorschleife bildende, U-förmige Induktoren 66 vorgesehen. Jeder U-förmige Induktor 66 besitzt zwei parallel zueinander angeordnete Induktorstäbe 67, die an einem Ende über zwei Stromleitungen mit dem Wechselstromgenerator der Induktionsheizung verbunden sind und am anderen Ende durch einen Querstab miteinander verbunden sind.

Ein langgestreckter Induktor kann auch mehrere parallel zueinander angeordnete Induktorstäbe umfassen, die jeweils eine eigene Induktorschleife bilden und an beiden Enden über eine Stromleitung mit dem Wechselstromgenerator der Induktionsheizung verbunden sind.

Zur Befestigung der Induktoren am Ofengestell sind in beiden Backzonen 22, 23 in größeren Abständen hintereinander angeordnete, in Ofenquerrichtung verlaufende Träger vorgesehen, an denen die Induktoren mit ihren in Ofenlängsrichtung verlaufenden Induktorstäben jeweils elektrisch isoliert befestigt sind. Für die oberen Induktoren 59, 61 sind jeweils oberhalb der oberen bzw. unteren Transportbahn 5, 6 angeordnete, obere Querträger 68 vorgesehen und für die unteren Induktoren 60,62 sind jeweils unterhalb der oberen bzw. unteren Transportbahn 5, 6 angeordnete, untere Querträger 69 vorgesehen. Als Induktorstäbe sind mit einem niedrigen, rechteckigen Vollquerschnitt versehene, massive Stäbe vorgesehen. Diese Stäbe sind horizontal ausgerichtet und mit ihren Breitseiten der jeweiligen Transportbahn 5, 6 zugewandt über bzw. unter den in der Transportbahn 5, 6 angeordneten, geschlossenen Backzangen 3 angeordnet.

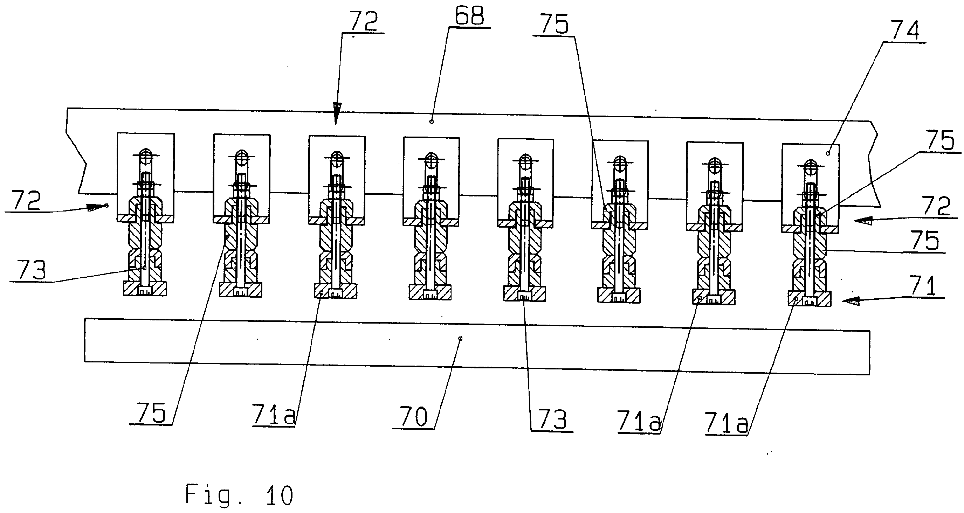

Fig. 10 zeigt einen oberhalb der Rückseite einer Suszeptorplatte 70 angeordneten, oberen Induktor 71. Dieser besitzt acht nebeneinander angeordnete Induktorstäbe 71a, die über elektrisch isolierende Befestigungsvorrichtungen 72 an einem oberen Querträger 68 des Ofengestells 7 jeweils vertikal verstellbar befestigt sind. Die unterhalb vom Querträger 68 angeordneten, flachen Induktorstäbe 71a sind an den unteren Enden der Befestigungsvorrichtungen 72 angeordnet und über vertikale Befestigungsschrauben 73 an den horizontal angeordneten, unteren Schenkeln von L-förmigen Befestigungsbügeln 74 befestigt, die mit ihren vertikal angeordneten, oberen Schenkeln am Träger 68 jeweils vertikal verstellbar befestigt sind. Zwischen den Befestigungsschrauben 73 und den unteren Schenkeln der Befestigungsbügel 74 sind jeweils mehrere elektrisch isolierende Zwischenstücke 75 angeordnet.

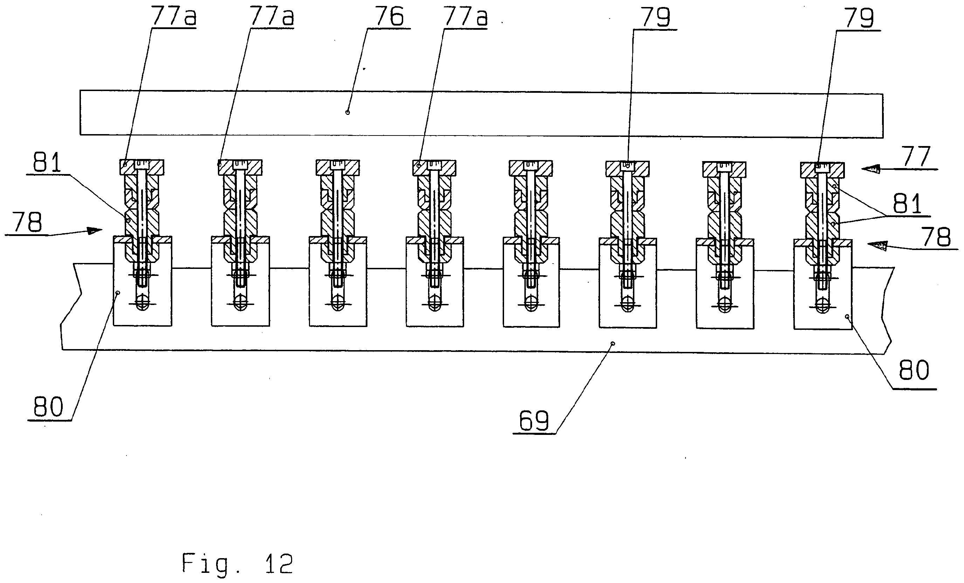

Fig. 12 zeigt einen unterhalb der Rückseite einer Suszeptorplatte 76 angeordneten, unteren Induktor 77 mit acht nebeneinander angeordnete Induktorstäben 77a, die über elektrisch isolierende Befestigungsvorrichtungen 78 an einem unteren Querträger 69 des Ofengestells 7 jeweils vertikal verstellbar befestigt sind. Die über dem unteren Querträger 69 angeordneten, flachen Induktorstäbe 77a sind an den oberen Enden der Befestigungsvorrichtungen 78 angeordnet und über vertikale Befestigungsschrauben 79 an den horizontal angeordneten, oberen Schenkeln von L-förmigen Befestigungsbügeln 80 befestigt, die mit ihren vertikal angeordneten, unteren Schenkeln am unteren Träger 69 jeweils vertikal verstellbar befestigt sind. Zwischen den Befestigungsschrauben 79 und den oberen Schenkeln der Befestigungsbügel 80 sind jeweils mehrere elektrisch isolierende Zwischenstücke 81 angeordnet.

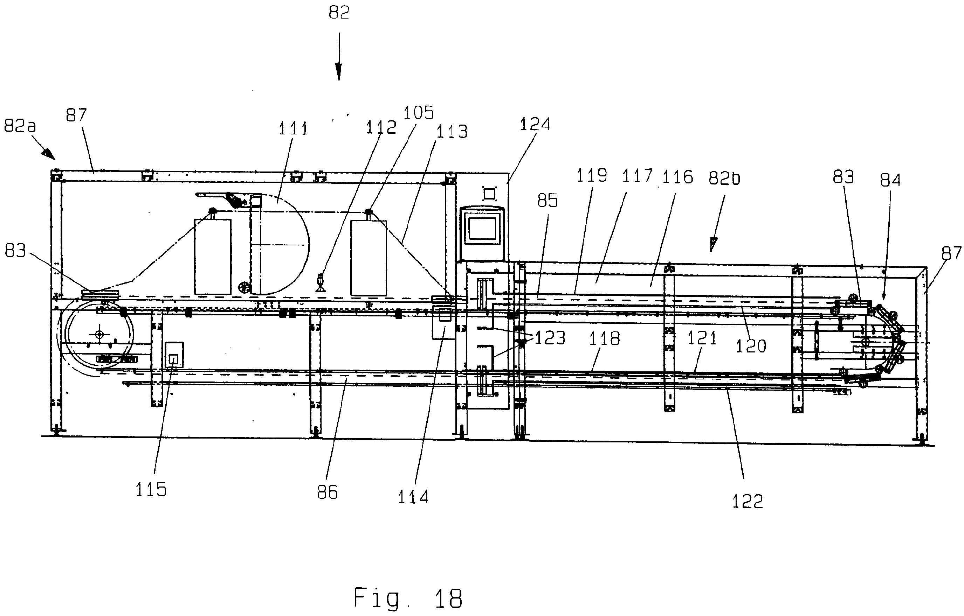

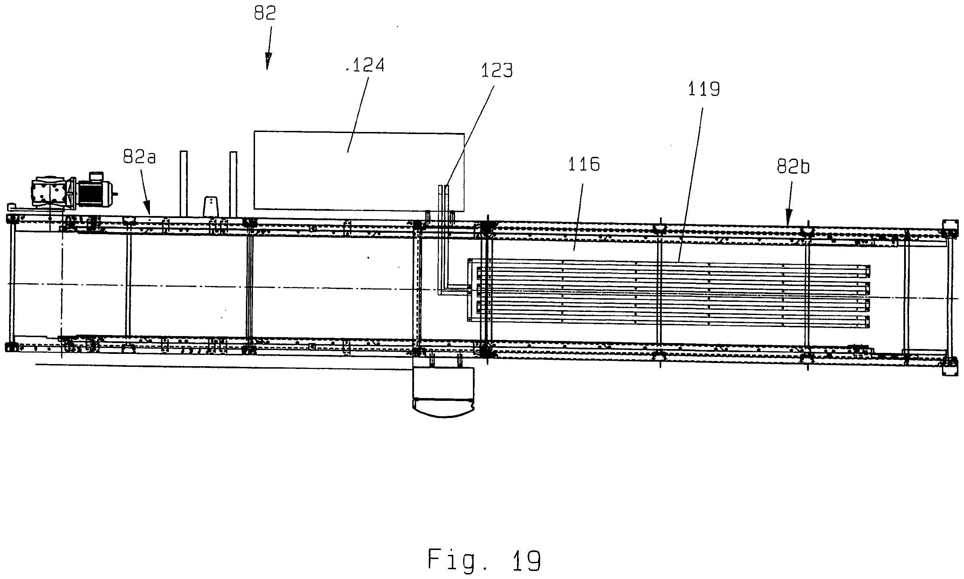

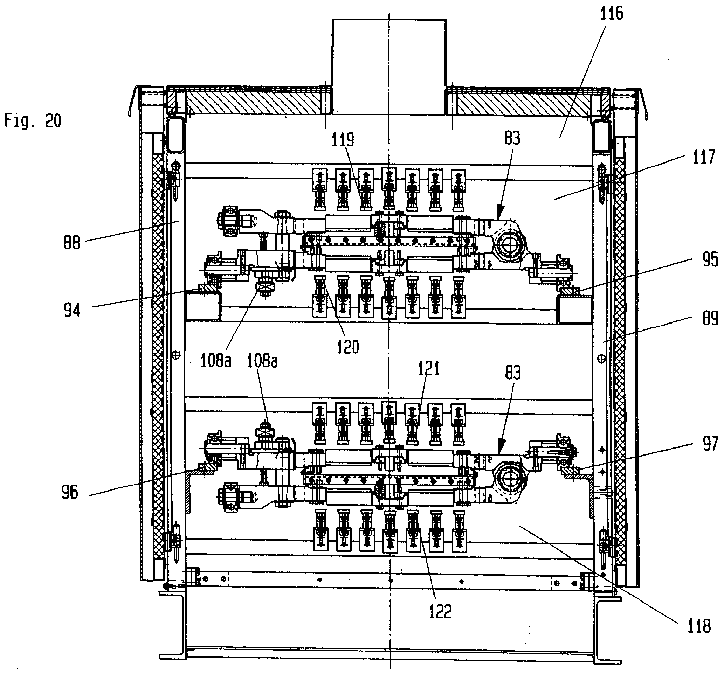

Die Fig. 18 bis 22 zeigen einen Backofen 82 zur Herstellung von gebackenen Formkörpern, die als rechteckige, knusprig-spröde Waffelblätter ausgebildet sind, die aus einem flüssigen Waffelteig in von zwei Backplatten gebildeten Backformen hergestellt werden.

Die Backformen sind in den Backzangen 83 einer endlosen Backzangenkette 84 aufgenommen. Die Backzangenkette 84 ist entlang einer Umlaufbahn angeordnet, die sich in zwei übereinander angeordneten, horizontalen Transportbahnen 85, 86 durch den Backofen 82 erstreckt. Die Backzangenkette 84 ist in einen entlang der Umlaufbahn angeordneten Kettenförderer integriert, der die Backzangen 83 durch beide Transportbahnen 85, 86 befördert und über seine am vorderen und hinteren Ende des Backofens 82 angeordneten Kettenräder von einer Transportbahn in die andere umlenkt.

Der Kettenförderer ist im langgestreckten Gestell 87 des Backofens 82 zwischen den beiden Ofenseitenwänden 88, 89 angeordnet. Die Backzangen 83 sind im Kettenförderer zwischen zwei seitlichen Transportketten 90, 91 angeordnet und an deren Kettenlaschen 90a, 91a befestigt. Von den Transportketten 90, 91 stehen nach außen Gelenksbolzen vor, an denen Laufräder 92, 93 drehbar gelagert sind, mit denen sich der Kettenförderer in beiden Transportbahnen 85, 86 jeweils auf in Ofenlängsrichtung verlaufenen Laufschienen 94, 95, 96, 97 abstützt, die an den beiden Seitenwänden 88, 89 des Ofengestells 87 befestigt sind.

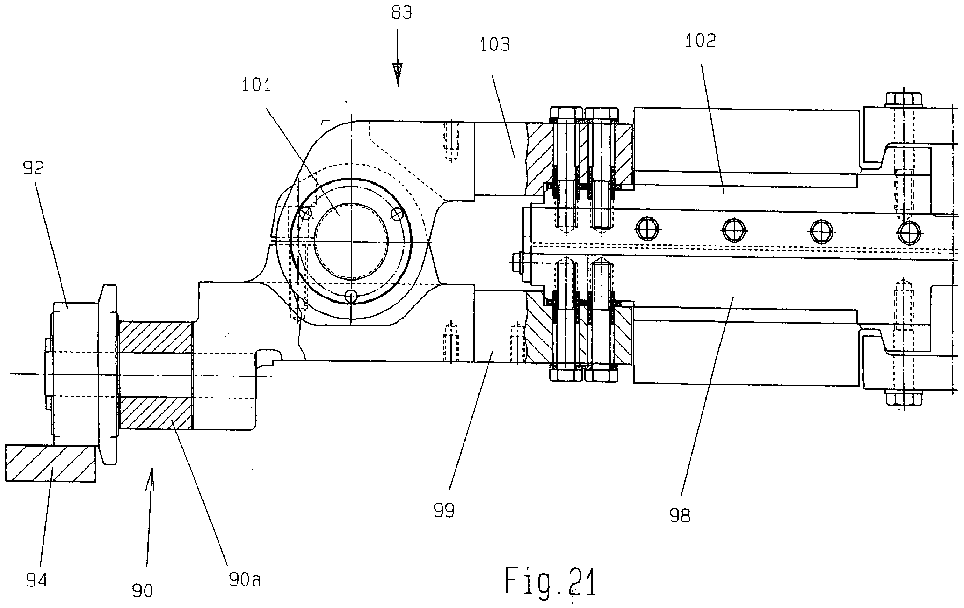

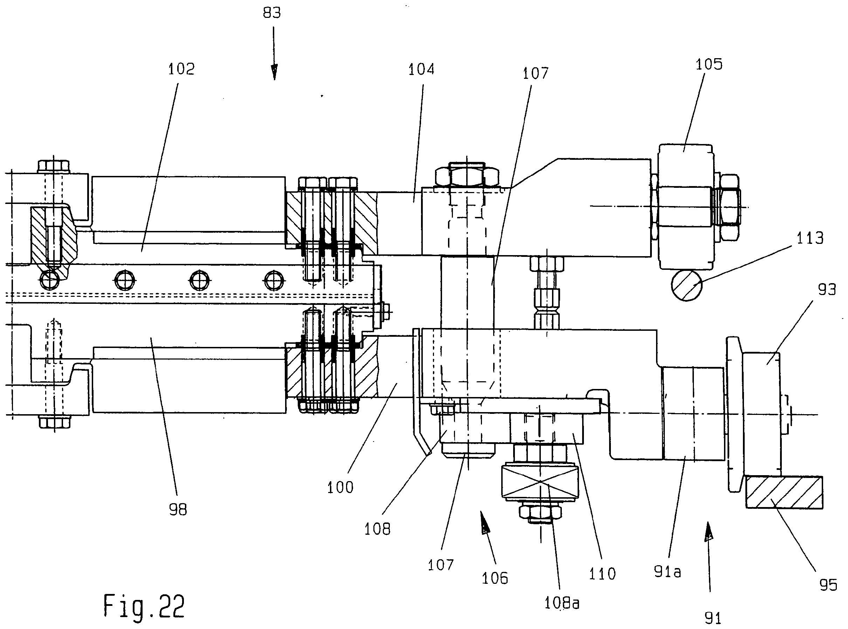

Die Fig. 21 und 22 zeigen eine Backzange 84 des Backofens 82.

Bei jeder Backzange 83 ist im unteren Zangenteil eine als Suszeptorplatte 98 ausgebildete, untere Backplatte zwischen einem linken und einem rechten, seitlichen Randstück 99, 100 des unteren Zangenteiles angeordnet. Der untere Zangenteil ist an seinen beiden Randstücken 99, 100 über horizontale Bolzen mit den Kettenlaschen 90a, 91a der seitlichen Transportketten 90, 91 des Kettenförderers verbunden. Am linken Randstück 99 des unteren Zangenteiles ist ein Scharnier 101 angebracht, das den unteren Zangenteil mit dem oberen Zangenteil schwenkbar verbindet. Im oberen Zangenteil ist eine als Suszeptorplatte 102 ausgebildete, obere Backplatte zwischen einem linken und einem rechten, seitlichen Randstück 103, 104 des oberen Zangenteiles angeordnet. Das linke Randstück 103 des oberen Zangenteiles ist mit dem Scharnier 101 verbunden und am rechten Randstück 104 des oberen Zangenteiles ist eine Steuerrolle 105 angebracht, mit deren Hilfe die Backzange 83 durch Verschwenken des oberen Zangenteiles geöffnet und geschlossen wird. Die beiden Suszeptorplatten 98, 102 besitzen jeweils eine an der Außenseite der Backzange 83 angeordnete Rückseite, über die sie berührungsfrei induktiv erwärmbar sind, und eine im Inneren der Backzange 83 angeordnete Vorderseite, an der die Backfläche der oberen bzw. unteren Backplatte angeordnet ist. Bei geschlossener Backzange 83 liegen die beiden Suszeptorplatten 98, 102 horizontal ausgerichtet übereinander und die an ihren Vorderseiten angeordneten Backflächen sind einander zugewandt.

Die Backzangen 83 sind jeweils mit einer Backzangenverriegelungsvorrichtung 106 versehen. Die Vorrichtung 106 sieht ein starres Verriegelungselement vor, das von einem Bolzen 107 gebildet wird, der am rechten Randstück 104 des oberen Zangenteiles angebracht ist und über die Vorderseite des oberen Zangenteiles vorsteht. Die Vorrichtung 106 sieht ein bewegliches Verriegelungselement vor, das von einem schwenkbaren Haken 108 gebildet wird. Der Haken 108 ist beim rechten Randstück 100 des unteren Zangenteiles an der Unterseite neben einer das Randstück 100 durchsetzenden Durchtrittsöffnung für den Bolzen 107 angeordnet. Vom Haken 108 steht nach unten eine Steuerrolle 108a ab, mit deren Hilfe der Haken 108 um seine zum Randstück 100 senkrecht angeordnete Schwenkachse verschwenkt werden kann. Beim Schließen der Backzange 83 wird der obere Zangenteil zum unteren Zangenteil geschwenkt und der Bolzen 107 wird in die Durchtrittsöffnung im rechten Randstück 100 des unteren Zangenteiles eingeführt. Am Ende der Schließbewegung ist der Bolzen 107 vertikal angeordnet und das freie Bolzenende 109 steht über die Rückseite des rechten Randstückes 100 des unteren Zangenteiles nach unten vor. Der Haken 108 wird mit Hilfe der Steuerrolle 108a um seine zum Bolzen 107 parallele Schwenkachse verschwenkt. Der Haken 108 wird mit seinem Hakenkopf 110 zum Bolzen 107 geschwenkt bis der Hakenkopf 110 in eine seitliche Umfangsnut des Bolzens 107 eingreift. Vor dem Öffnen der Backzange 83 wird der Haken 108 mit seinem Hakenkopf 110 vom Bolzen 107 weggeschwenkt und der Bolzen 107 freigegeben.

In der vorderen Ofenhälfte 82a sind an der oberen Transportbahn 85 eine Ausgabestation 111, eine Eingabestation 112, eine Einrichtung 113 zum Öffnen und Schließen der Backzangen 83 und eine Betätigungsvorrichtung 114 für die Backzangenverriegelungsvorrichtungen 106 der Backzangen 83 angeordnet. In der Ausgabestation 111 werden gebackene, knusprig-spröde Waffelblätter aus den geöffneten Backzangen 83 entnommen. In der Eingabestation 112 wird flüssiger Waffelteig in die geöffneten Backzangen 83 eingebracht. Nach der Eingabestation 112 werden die Backzangen 83 durch die Einrichtung 113 geschlossen. Die Einrichtung 113 sieht eine entlang der oberen Transportbahn 85 angeordnete Führungsstange vor, an der die Backzangen 83 mit ihren Steuerrollen 105 entlanglaufen und durch die Steuerrollen 105 geöffnet und geschlossen werden.

Die Betätigungsvorrichtung 114 für die Backzangenverriegelungsvorrichtungen 106 sieht eine stationäre, schräge Stange vor, die in die Bahn der Steuerrolle 108a des Hakens 108 der Backzangenverriegelungsvorrichtung 106 ragt. Bei jeder an der Betätigungsvorrichtung 114 vorbeilaufenden, geschlossenen Backzange 83 kommt die Steuerrolle 108a des Hakens 108 der Backzangenverriegelungsvorrichtung 106 mit der schrägen Stange der Betätigungsvorrichtung 114 in Eingriff. Durch diesen Eingriff wird über die Steuerrolle 108a der Haken 108 verschwenkt und die Backzangenverriegelungsvorrichtung 106 verriegelt. Der Kettenförderer befördert die geschlossenen und verriegelten Backzangen 83 in der oberen Transportbahn 85 nach hinten zum hinteren Ende des Backofens 82 und in der unteren Transportbahn 86 nach vorne zum vorderen Ende des Backofens 82. In der vorderen Ofenhälfte 82a ist an der unteren Transportbahn 86 eine zweite Betätigungsvorrichtung 115 für die Backzangenverriegelungsvorrichtungen 106 der Backzangen 83 angeordnet. Die zweite Betätigungsvorrichtung 115 sieht eine in die Bahn der Steuerrolle 108a ragende schräge Stange vor, die bei jeder an ihr vorbeilaufenden, geschlossenen und verriegelten Backzange 83 mit der Steuerrolle 108a des Hakens 108 der Backzangenverriegelungsvorrichtung 106 in Eingriff kommt, den Haken 108 verschwenkt und die Backzangenverriegelungsvorrichtung 106 entriegelt.

Der Backofen 82 ist mit einer Induktionsheizung versehen. Der Backraum 116 ist in der hinteren Ofenhälfte 82b untergebracht. Im Backraum 116 ist an der oberen Transportbahn 85 eine obere Backzone 117 und an der unteren Transportbahn 86 eine untere Backzone 118 angeordnet. In den beiden Backzonen 117, 118 sind langgestreckte, obere und untere Induktoren 119, 120, 121, 122 vorgesehen, die über Stromleitungen 123 mit einem neben der vorderen Ofenhälfte 82a angeordneten Wechselstromgenerator 124 verbunden sind, der die Induktoren 119, 120, 121, 122 mit Strom versorgt. Die Induktoren 119, 120, 121, 122 sind in den beiden Backzonen 117, 118 jeweils oberhalb bzw. unterhalb der geschlossenen Backzangen 83 angeordnet. Sie erzeugen jeweils ein großflächiges, breites und langgestrecktes Magnetfeld, das sich über mehrere hintereinander angeordnete Backzangen 83 erstreckt.

In der oberen Backzone 117 ist ein langgestreckter, oberer Induktor 119 über den Backzangen 83 und ein langgestreckter, unterer Induktor 120 unterhalb der Backzangen 83 angeordnet. Das vom oberen Induktor 119 erzeugte Magnetfeld reicht nach unten bis zu den an den Oberseiten der Backzangen 83 angeordneten, als Suszeptorplatten 102 ausgebildeten Backplatten. Diese Suszeptorplatten 102 werden durch das vom oberen Induktor 119 erzeugte Magnetfeld berührungsfrei induktiv erwärmt. Das vom unteren Induktor 120 erzeugte Magnetfeld reicht nach oben bis zu den an den Unterseiten der Backzangen 83 angeordneten, als Suszeptorplatten 98 ausgebildeten Backplatten. Diese Suszeptorplatten 98 werden durch das vom unteren Induktor 120 erzeugte Magnetfeld berührungsfrei induktiv erwärmt.

In der unteren Backzone 118 ist ein langgestreckter, oberer Induktor 121 über den Backzangen 83 und ein langgestreckter, unterer Induktor 122 unterhalb der Backzangen 83 angeordnet. Das vom oberen Induktor 121 erzeugte Magnetfeld reicht nach unten bis zu den an den Oberseiten der Backzangen 83 angeordneten, als Suszeptorplatten 98 ausgebildeten Backplatten. Diese Suszeptorplatten 98 werden durch das vom oberen Induktor 121 erzeugte Magnetfeld berührungsfrei induktiv erwärmt. Das vom unteren Induktor 122 erzeugte Magnetfeld reicht nach oben bis zu den an den Unterseiten der Backzangen 83 angeordneten, als Suszeptorplatten 102 ausgebildeten Backplatten. Diese Suszeptorplatten 102 werden durch das vom unteren Induktor 122 erzeugte Magnetfeld berührungsfrei induktiv erwärmt.

Die Induktoren 119, 120, 121, 122 erstrecken sich in der jeweiligen Backzone 117, 118 längs der Umlaufbahn der Backzangen 83 über mehrere hintereinander angeordnete Backzangen 83. Die Induktoren 119, 120, 121, 122 erzeugen jeweils ein breites Magnetfeld, das sich längs der Umlaufbahn der Backzangen 83 über mehrere hintereinander angeordnete Backzangen 83 erstreckt und bei den hintereinander angeordneten Backzangen 83 die als Suszeptorplatten 98, 102 ausgebildeten Backplatten berührungsfrei induktiv erwärmt. Die Induktoren 119, 120, 121, 122 können unterschiedliche Bauformen aufweisen. Sie können die in den Fig. 13-17 dargestellten Bauformen aufweisen. Die Befestigung der Induktoren 119, 120, 121, 122 im Gestell 87 des Backofens 82 entspricht jeweils der oben im Zusammenhang mit den Fig. 10-12 erläuterten Befestigung.

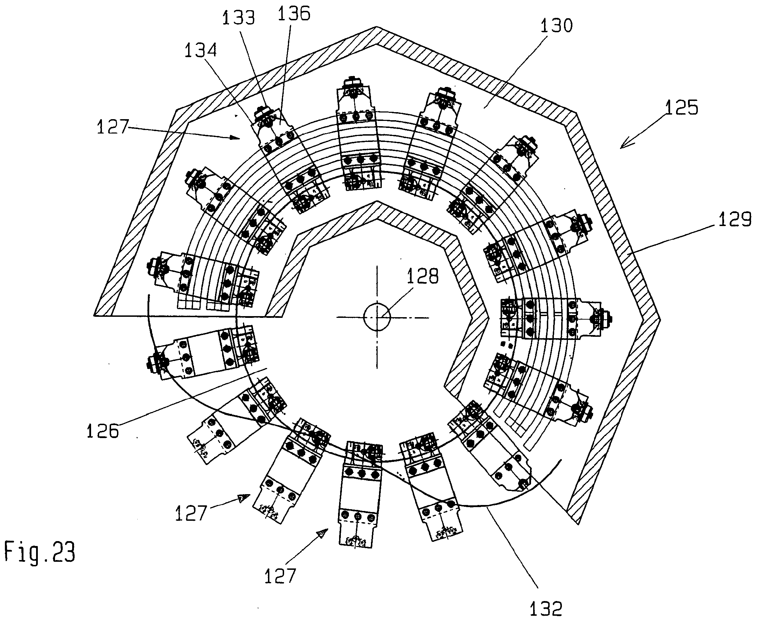

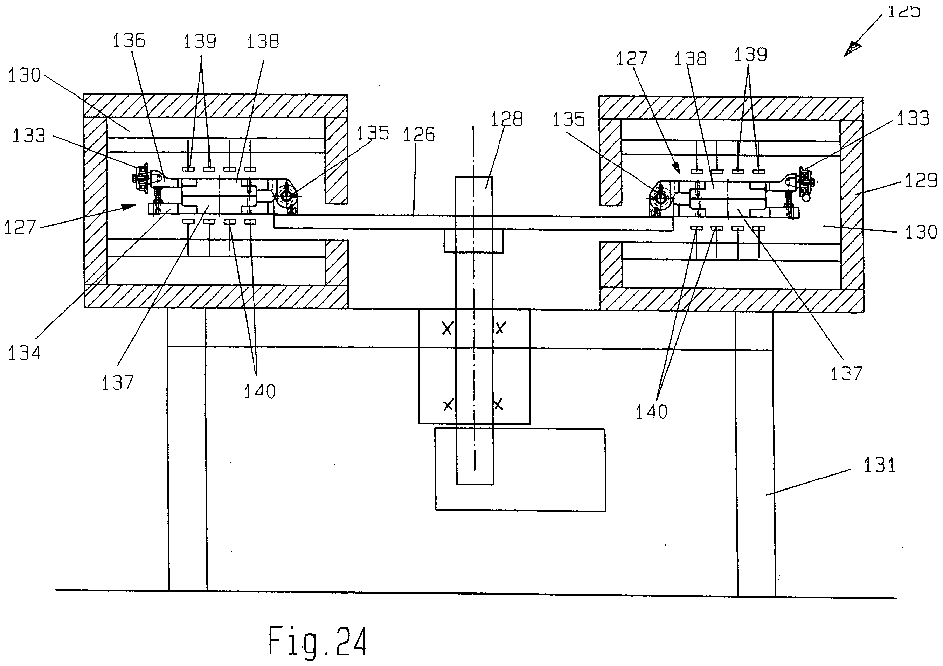

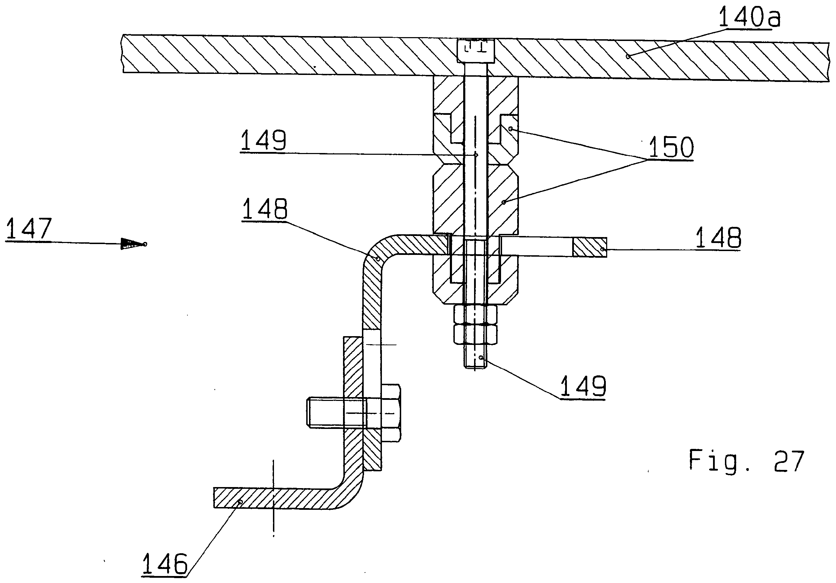

Die Fig. 23 bis 27 zeigen einen Backofen 125, bei dem auf einem horizontalen, runden Drehtisch 126 mehrere Backzangen 127 entlang einer Kreisbahn nebeneinander angeordnet sind und durch die Drehbewegung des Drehtisches 126 längs der Kreisbahn durch den Backofen befördert werden. Der Drehtisch 126 ist um eine vertikale Drehachse 128 drehbar. Der Backofen 125 besitzt ein sich entlang der Kreisbahn erstreckendes ringförmiges bzw. vieleckiges Gehäuse 129, in dem der Backraum 130 des Backofens 126 angeordnet ist. Das Gehäuse 129 ist auf einem Untergestell 131 angeordnet. An der Vorderseite des Backofens 125 ist das Gehäuse 129 offen ausgebildet. Im offenen Bereich des Gehäuses 129 ist die Eingabestation und die Ausgabestation des Backofens 125 angeordnet. Im offenen Bereich des Gehäuses 129 ist eine entlang der Kreisbahn angeordnete Führungsstange 132 vorgesehen, an der die Backzangen 127 mit ihren Steuerrollen 133 entlang laufen und durch die Steuerrollen 133 geöffnet und geschlossen werden.

Jede Backzange 127 besitzt einen am Drehtisch 126 befestigten, unteren Zangenteil 134, der über ein Scharnier 135 mit einem oberen Zangenteil 136 schwenkbar verbunden ist, der an seinem freien Ende die Steuerrolle 133 trägt. Im unteren Zangenteil 134 ist eine als Suszeptorplatte 137 ausgebildete, untere Backplatte und im oberen Zangenteil 136 ist eine als Suszeptorplatte 138 ausgebildete, obere Backplatte angeordnet. Die beiden Suszeptorplatten 137, 138 besitzen jeweils eine an der Außenseite der Backzange 127 angeordnete Rückseite, über die sie berührungsfrei induktiv erwärmbar sind, und eine im Inneren der Backzange 127 angeordnete Vorderseite, an der die Backfläche der oberen bzw. unteren Backplatte angeordnet ist. Bei geschlossener Backzange 127 liegen die Suszeptorplatten 137, 138 horizontal ausgerichtet übereinander und die an ihren Vorderseiten angeordneten Backflächen sind einander zugewandt.

Die Backzangen 127 werden durch die Drehbewegung des Drehtisches 126 entlang der Kreisbahn durch den Backraum 130 befördert. Im Backraum 130 ist eine entlang der Kreisbahn verlaufende Backzone vorgesehen. In dieser ist über der Kreisbahn ein langgestreckter bogenförmiger, oberer Induktor 139 und unter der Kreisbahn ein langgestreckter bogenförmiger, unterer Induktor 140 angeordnet. Beide Induktoren 139, 140 erzeugen ein großflächiges, breites, langgestrecktes, bogenförmig verlaufendes Magnetfeld, das sich längs der Kreisbahn über mehrere nebeneinander angeordnete Backzangen 127 erstreckt. Das vom oberen Induktor 139 erzeugte Magnetfeld reicht von ihm nach unten bis in die oberen Zangenteile der Backzangen 127, in denen die als Suszeptorplatten 138 ausgebildeten, oberen Backplatten berührungsfrei induktiv erwärmt werden. Das vom unteren Induktor 140 erzeugte Magnetfeld reicht von ihm nach oben bis in die unteren Zangenteile der Backzangen 127, in denen die als Suszeptorplatten 137 ausgebildeten, unteren Backplatten berührungsfrei induktiv erwärmt werden.

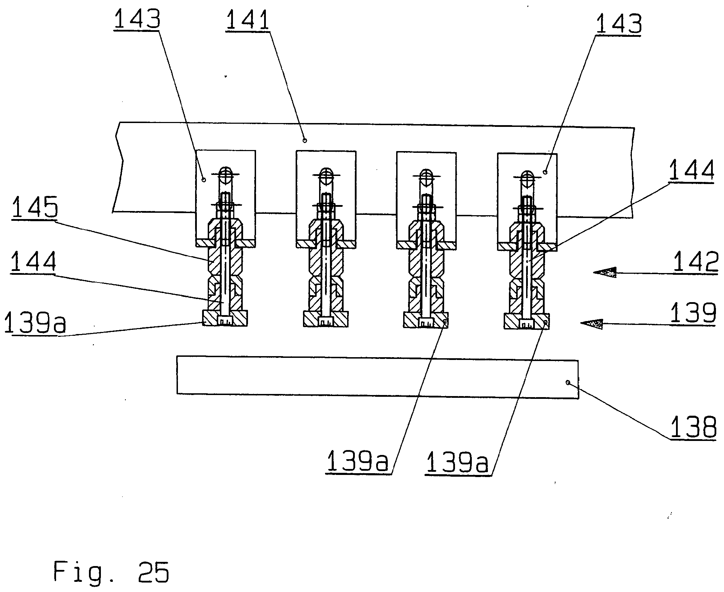

Der obere Induktor 139 ist im Gehäuse 129 knapp über den als Suszeptorplatten 138 ausgebildeten, oberen Backplatten der geschlossenen Backzangen 127 angeordnet. Er ist im Gehäuse 129 an einem quer zur Kreisbahn verlaufenden, oberen Träger 141 befestigt. Er besitzt vier nebeneinander angeordnete Induktorstäbe 139a. Diese sind als flache massive Stäbe ausgebildet, die einen niedrigen, rechteckigen Vollquerschnitt besitzen. Die flachen Induktorstäbe 139a sind über elektrisch isolierende Befestigungsvorrichtungen 142 am oberen Träger 141 befestigt sind. Die Befestigungsvorrichtungen 142 sehen L-förmige Befestigungsbügel 143 vor, die mit ihren vertikal angeordneten, oberen Schenkeln am Träger 141 vertikal verstellbar befestigt sind. Die flachen Induktorstäbe 139a sind an den unteren Enden der Befestigungsvorrichtungen 142 angeordnet und über vertikale Befestigungsschrauben 144 an den horizontal angeordneten, unteren Schenkeln der Befestigungsbügel 143 befestigt. Zwischen den Befestigungsschrauben 144 und den unteren Schenkeln der Befestigungsbügel 143 sind jeweils mehrere elektrisch isolierende Zwischenstücke 145 angeordnet. (Fig. 25)

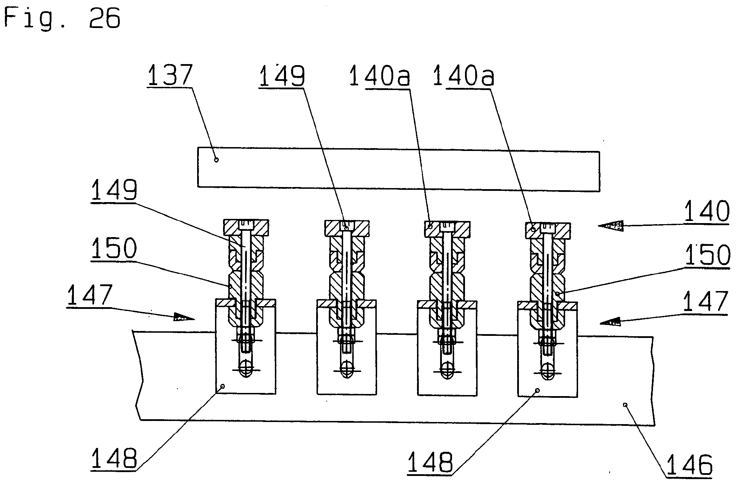

Der untere Induktor 140 ist im Gehäuse 129 knapp unter den als Suszeptorplatten 137 ausgebildeten, unteren Backplatten der geschlossenen Backzangen 127 angeordnet. Er ist im Gehäuse 129 an einem quer zur Kreisbahn verlaufenden, unteren Träger 146 befestigt. Er besitzt vier nebeneinander angeordnete Induktorstäbe 140a. Diese sind als flache massive Stäbe ausgebildet, die einen niedrigen, rechteckigen Vollquerschnitt besitzen. Die flachen Induktorstäbe 140a sind über elektrisch isolierende Befestigungsvorrichtungen 147 am unteren Träger 146 befestigt sind. Die Befestigungsvorrichtungen 147 sehen L-förmige Befestigungsbügel 148 vor, die mit ihren vertikal angeordneten, unteren Schenkeln am Träger 146 vertikal verstellbar befestigt sind. Die flachen Induktorstäbe 140a sind an den oberen Enden der Befestigungsvorrichtungen 147 angeordnet und über vertikale Befestigungsschrauben 149 an den horizontal angeordneten, oberen Schenkeln der Befestigungsbügel 148 befestigt. Zwischen den Befestigungsschrauben 149 und den unteren Schenkeln der Befestigungsbügel 148 sind jeweils mehrere elektrisch isolierende Zwischenstücke 150 angeordnet. (Fig. 26)

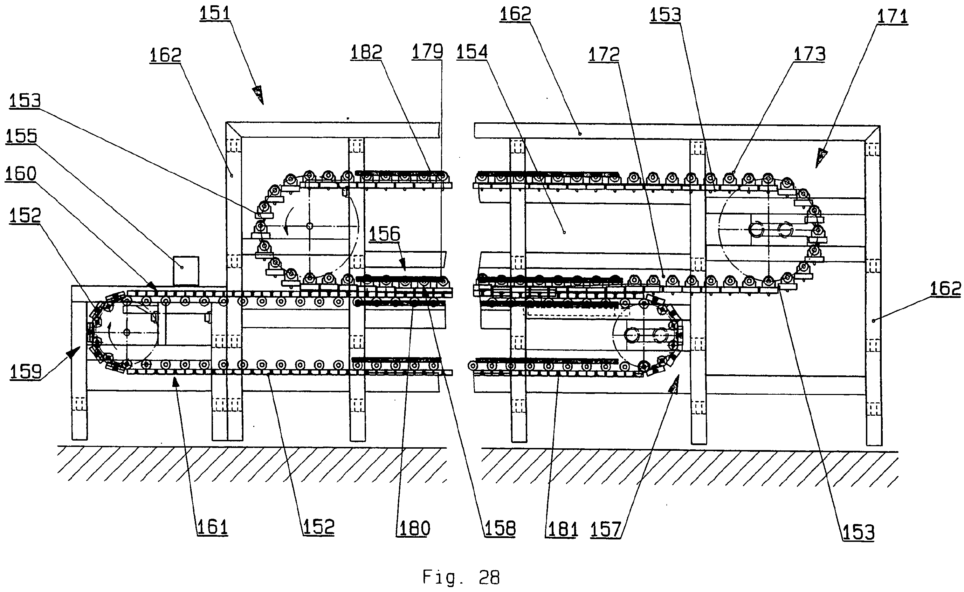

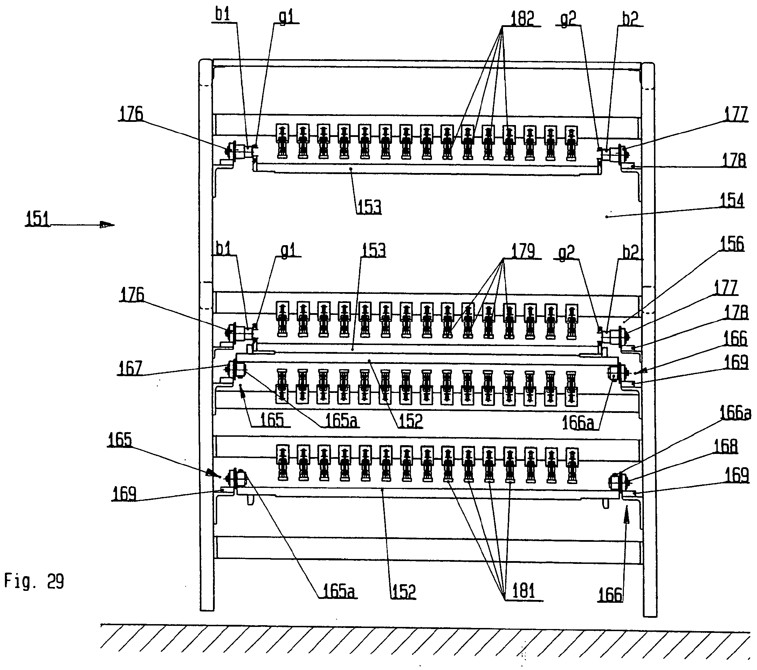

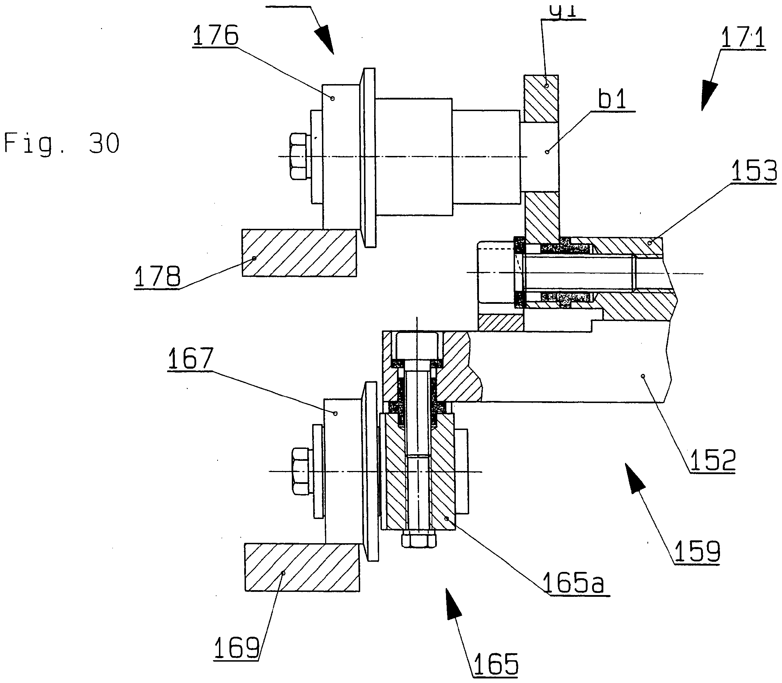

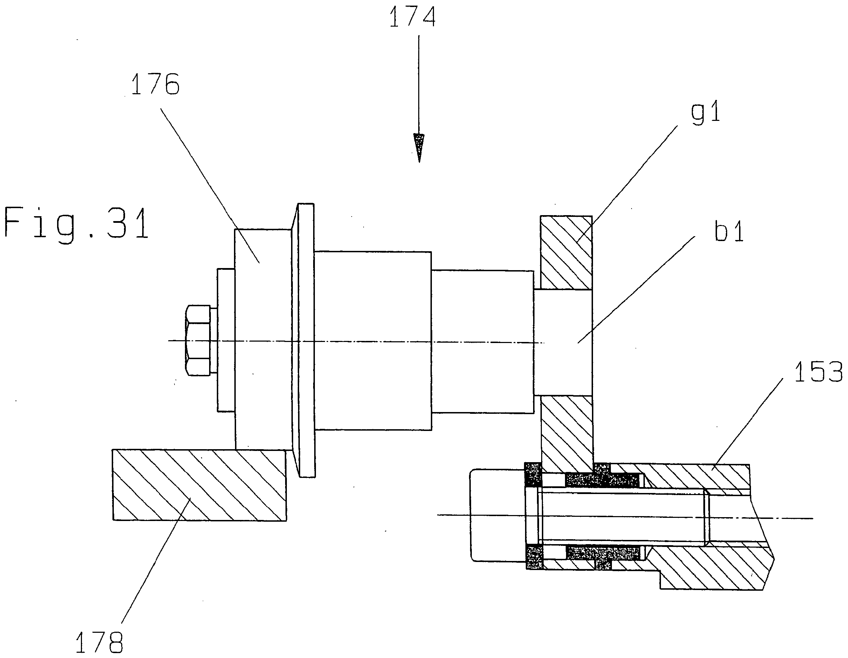

Die Fig. 28 bis 31 zeigen einen Backofen 151 zur Herstellung von gebackenen Formkörpern, in jeweils aus zwei übereinander angeordneten Backplatten 152, 153 bestehenden Backformen. Diese Backformen sind im Backraum 154 entlang einer horizontalen Backstrecke hintereinander angeordnet. Die Backstrecke erstreckt sich von der Eingabestation 155 des Backofens 151 durch eine im Backraum 154 angeordnete Backzone 156 zur Ausgabestation 157 des Backofens 151. In der Eingabestation 155 werden Teigportionen auf die unteren Backplatten 152 der Backform aufgebracht. Am Beginn der horizontalen Backstrecke 158 werden die oberen Backplatten 153 auf den unteren Backplatten 152 abgesetzt und dadurch die Backformen geschlossen. In der Ausgabestation 157 werden die oberen Backplatten 153 von den unteren Backplatten 152 abgehoben und die gebackenen Formkörper aus den dadurch geöffneten Backformen ausgegeben.

Im Backofen 151 ist unterhalb der horizontalen Backstrecke 158 ein unterer Kettenförderer 159 angeordnet, der die entlang einer unteren Umlaufbahn angeordneten, unteren Backplatten 152 trägt. Die untere Umlaufbahn erstreckt sich in zwei übereinander angeordneten, horizontalen Transportbahnen 160,161 durch den unteren Teil des Backofens 151. Die Transportbahn 160 an der Oberseite des Kettenförderers 159 ist entlang der horizontalen Backstrecke 158 angeordnet und bildet den Backabschnitt des Kettenförderers 159. Die Transportbahn 161 an der Unterseite des Kettenförderers 159 bildet den Rücklaufabschnitt des Kettenförderers 159. Der Kettenförderer 159 befördert seine Backplatten 152 durch beide Transportbahnen 160,161 und lenkt sie an seinem vorderen und hinteren Ende über Kettenräder von einer Transportbahn in die andere um.

Der Kettenförderer 159 ist im langgestreckten Gestell 162 des Backofens 151 zwischen den beiden Seitenwänden 163, 164 des Ofengestells 162 im unteren Teil des Backofens 151 angeordnet. Der Kettenförderer 159 besitzt zwei seitliche Transportketten 165, 166, zwischen denen die unteren Backplatten 152 angeordnet sind. Die Transportketten 165, 166 sind mit seitlich vorstehenden Gelenksbolzen versehen, an denen jeweils Laufräder 167, 168 drehbar gelagert sind, mit denen sich der Kettenförderer 159 bei beiden Transportbahnen 160, 161 auf in Ofenlängsrichtung verlaufenen, an den Seitenwänden 163, 164 befestigten Laufschienen 169 abstützt. Die Transportketten 165, 166 sind als Laschenketten ausgebildet. Die unteren Backplatten 152 sind mit ihren seitlichen Randstücken an den Kettenlaschen 165a, 166a der beiden Transportketten 165, 166 befestigt. Die unteren Backplatten 152 sind als Suszeptorplatten ausgebildet, die über ihre freiliegenden Rückseiten berührungsfrei induktiv erwärmbar sind und an ihren Vorderseiten die Backflächen der unteren Backplatten 152 tragen. Zwischen den Kettenlaschen 165a, 166a und den unteren Backplatten 152 sind elektrisch isolierende Zwischenlagen 170 angeordnet, die einen metallischen Kontakt zwischen den Kettenlaschen 165a, 166a und den unteren Backplatten 152 verhindern.

Im Backofen 151 ist oberhalb der horizontalen Backstrecke 158 ein oberer Kettenförderer 171 angeordnet, der die entlang einer oberen Umlaufbahn angeordneten, oberen Backplatten 153 trägt. Die obere Umlaufbahn erstreckt sich in zwei übereinander angeordneten, horizontalen Transportbahnen 172, 173 durch den oberen Teil des Backofens 151. Die Transportbahn 172 an der Unterseite des Kettenförderers 171 ist entlang der horizontalen Backstrecke 158 angeordnet und bildet den Backabschnitt des Kettenförderers 171. Die Transportbahn 173 an der Oberseite des Kettenförderers 171 bildet den Rücklaufabschnitt des Kettenförderers 171. Der Kettenförderer 171 befördert seine Backplatten 153 durch beide Transportbahnen 172, 173 und lenkt sie an seinem vorderen und hinteren Ende über Kettenräder von einer Transportbahn in die andere um.

Der obere Kettenförderer 171 besitzt zwei seitliche Transportketten 174, 175. Die oberen Backplatten 153 sind zwischen den beiden Transportketten 174, 175 angeordnet und an von den Transportketten 174, 175 nach innen abstehenden Bolzen b1, b2 frei pendelnd aufgehängt. Die Backflächen sind an den nach unten weisenden Vorderseiten der oberen Backplatten 153 angeordnet. Die oberen Backplatten 153 tragen an ihren seitlichen Randstücken nach oben vorstehende Gehänge gl, g2 mit denen sie an den Bolzen bl, b2 der Transportketten 174, 175 frei pendelnd aufgehängt sind. Die oberen Backplatten 153 werden durch die Schwerkraft in ihrer mit den Backflächen nach unten weisenden Lage gehalten. Die oberen Backplatten 153 sind als Suszeptorplatten ausgebildet, die über ihre nach oben weisenden Rückseiten berührungsfrei induktiv erwärmbar sind. Zwischen den Suszeptorplatten und den Gehängen gl, g2 der oberen Backplatten 153 sind elektrisch isolierende Zwischenlagen 176 angeordnet, die einen metallischen Kontakt zwischen den Gehängen gl, g2 und den oberen Backplatten 153 verhindern. Die Transportketten 174, 175 sind mit nach außen vorstehenden Gelenksbolzen versehen, an denen jeweils Laufräder 176, 177 drehbar gelagert sind, mit denen sich der Kettenförderer 171 bei beiden Transportbahnen 172, 173 auf in Ofenlängsrichtung verlaufenen, an den Seitenwänden 163, 164 das Ofengestells 162 befestigten Laufschienen 178 abstützt.

Der Backofen 151 ist mit einer Induktionsheizung versehen. Die Induktionsheizung sieht in der Backzone 156 einen langgestreckten, oberen Induktor 179 vor, der ein großflächiges, breites und langgestrecktes Magnetfeld erzeugt, das sich über mehrere hintereinander angeordnete Backformen erstreckt. Der obere Induktor 179 ist knapp über den entlang der horizontalen Backstrecke 158 angeordneten Backformen angeordnet. Die an den Oberseiten der Backformen angeordneten, als Suszeptorplatten ausgebildeten, oberen Backplatten 153 werden durch das vom oberen Induktor 179 erzeugte Magnetfeld berührungsfrei induktiv erwärmt. Die Induktionsheizung sieht in der Backzone 156 einen langgestreckten, unteren Induktor 180 vor, der ein großflächiges, breites und langgestrecktes Magnetfeld erzeugt, das sich über mehrere hintereinander angeordnete Backformen erstreckt. Der untere Induktor 180 ist knapp unter den entlang der horizontalen Backstrecke 158 angeordneten Backformen angeordnet. Die an den Unterseiten der Backformen angeordneten, als Suszeptorplatten ausgebildeten, unteren Backplatten 152 werden durch das vom unteren Induktor 179 erzeugte Magnetfeld berührungsfrei induktiv erwärmt.

Die Induktionsheizung sieht weiters an den Rücklaufabschnitten 171, 173 der beiden Kettenförderer 159, 171 angeordnete, zusätzliche Induktoren 181, 182 vor.

Beim Rücklaufabschnitt 161 des unteren Kettenförderers 159 ist ein zusätzlicher Induktor 181 vorgesehen, der ein großflächiges, breites und langgestrecktes Magnetfeld erzeugt, das sich über mehrere hintereinander angeordnete, untere Backplatten 152 erstreckt. Dieser zusätzliche Induktor 181 ist über den nach oben weisenden Rückseiten der unteren Backplatten 152 angeordnet. Die im Rücklaufabschnitt 161 angeordneten, als Suszeptorplatten ausgebildeten, unteren Backplatten 152 werden durch das vom zusätzliche Induktor 181 erzeugte Magnetfeld berührungsfrei induktiv erwärmt.

Beim Rücklaufabschnitt 173 des oberen Kettenförderers 171 ist ein weiterer zusätzlicher Induktor 182 vorgesehen, der ein großflächiges, breites und langgestrecktes Magnetfeld erzeugt, das sich über mehrere hintereinander angeordnete, obere Backplatten 153 erstreckt. Dieser zusätzliche Induktor 182 ist über den nach oben weisenden Rückseiten der oberen Backplatten 153 angeordnet. Die im Rücklaufabschnitt 173 angeordneten, als Suszeptorplatten ausgebildeten, oberen Backplatten 153 werden durch das vom zusätzliche Induktor 182 erzeugte Magnetfeld berührungsfrei induktiv erwärmt.

Die Induktoren 179, 180 und die zusätzlichen Induktoren 181, 182 erstrecken sich jeweils längs der Bahn der oberen bzw. unteren Backplatten 152, 153 über mehrere hintereinander angeordnete obere bzw. untere Backplatten 152, 153. Die Induktoren 179, 180, 181, 182 erzeugen jeweils ein breites Magnetfeld, das sich längs der Umlaufbahn der Backplatten 152, 153 über mehrere hintereinander angeordnete Backplatten 152, 153 erstreckt und mehrere hintereinander angeordnete, als Suszeptorplatten ausgebildete Backplatten 152, 153 berührungsfrei induktiv erwärmt. Die Induktoren 179, 180, 181, 182 können unterschiedliche Bauformen aufweisen. Sie können die in den Fig. 13-17 dargestellten Bauformen aufweisen. Die Befestigung der Induktoren 179, 180, 181, 182 im Gestell 162 des Backofens 151 entspricht jeweils der oben im Zusammenhang mit den Fig. 10-12 erläuterten Befestigung.

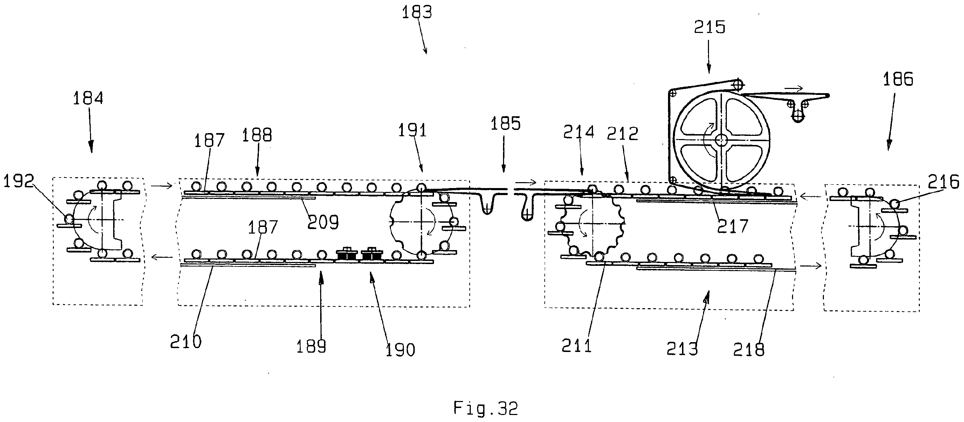

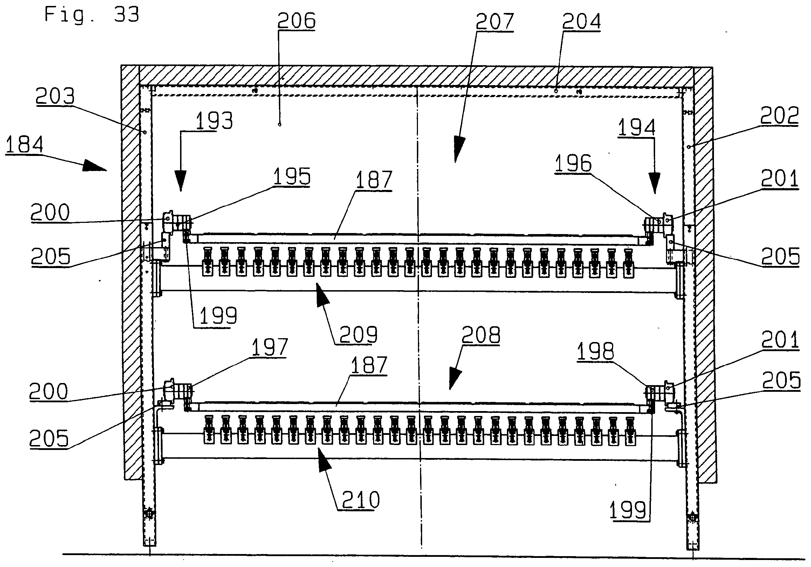

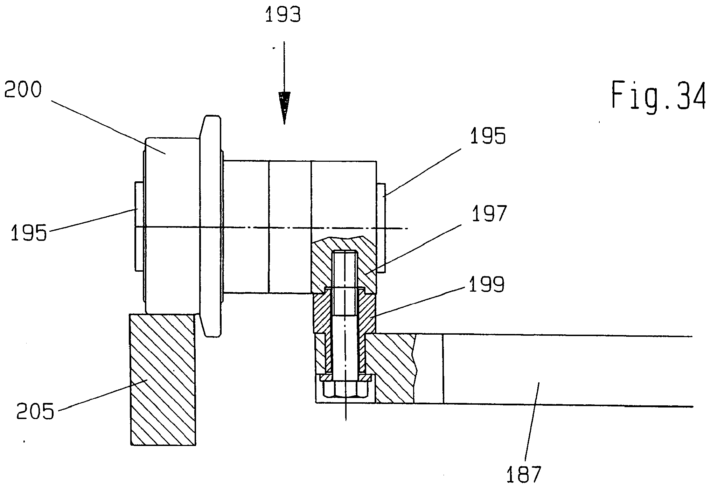

Die Fig. 32 bis 34 zeigen eine Backanlage 183 zu Herstellung von flachen, beidseitig gebackenen Formkörpern. Die Backanlage 183 sieht einen ersten Backofen 184 vor, in dem flache Teigfladen hergestellt und an der Unterseite gebacken werden. An den ersten Backofen 184 schließt eine Wendevorrichtung 185 an. In dieser werden die an der Unterseite gebackenen Teigfladen mit der Oberseite nach unten umgedreht und dann mit der Oberseite nach unten an einen zweiten Backofen 186 übergeben, in dem die Teigfladen an der zweiten Seite gebacken werden.

Im ersten Backofen 184 sind ebene Backplatten 187 entlang einer Umlaufbahn angeordnet, die sich entlang von zwei übereinander angeordneten, horizontalen Transportbahnen 188, 189 durch den Backofen 184 erstreckt. Die Eingabestation 190 ist an der unteren Transportbahn 189 angeordnet. In der Eingabestation 190 werden die flachen Teigfladen erzeugt. Dazu wird ein flüssiger Backteig auf die nach oben weisenden Backflächen der Backplatten 187 aufgebracht. Die Ausgabestation 191 ist am hinteren Ende des Backofens 184 an der oberen Transportbahn 188 angeordnet. In der Ausgabestation 191 werden die an der Unterseite gebackenen Teigfladen von den nach oben weisenden Backflächen der Backplatten 187 abgenommen und an die Wendevorrichtung 185 übergeben.

Der Backofen 184 besitzt einen Kettenförderer 192, der entlang der Umlaufbahn der ebenen Backplatten 187 angeordnet ist und im Uhrzeigersinn umläuft. Der Kettenförderer 192 befördert seine Backplatten 187 durch beide Transportbahnen 188, 189 und lenkt sie an seinem vorderen und hinteren Ende über Kettenräder von einer Transportbahn in die andere um. Der Kettenförderer 192 besitzt zwei seitliche Transportketten 193, 194. Dies sind jeweils als Laschenketten ausgebildet, bei denen die Gelenksbolzen an der Innenseite und an der Außenseite seitlich vorstehen. Die Backplatten 187 sind zwischen den beiden Transportketten 193, 194 angeordnet und an den von diesen jeweils nach innen vorstehenden Abschnitten der Gelenksbolzen 195, 196 frei pendelnd aufgehängt. Die Backflächen sind an den nach oben weisenden Vorderseiten der Backplatten 187 angeordnet. Die Backplatten 187 tragen an ihren seitlichen Randstücken nach oben vorstehende Gehänge 197, 198. Mit diesen Gehängen 197, 198 sind sie an den von beiden Transportketten 193, 194 nach innen vorstehenden Abschnitten der Gelenksbolzen 195, 196 frei pendelnd aufgehängt. Die Backplatten 187 werden durch die Schwerkraft in ihrer mit den Backflächen nach oben weisenden Lage gehalten. Die Backplatten 187 sind als Suszeptorplatten ausgebildet, die über ihre nach unten weisenden Rückseiten berührungsfrei induktiv erwärmbar sind. Zwischen den Suszeptorplatten und den Gehängen 197, 198 der Backplatten 187 sind elektrisch isolierende Zwischenlagen 199 angeordnet, die einen metallischen Kontakt zwischen den Gehängen 197, 198 und den Backplatten 187 verhindern. An den von beiden Transportketten 193, 194 nach außen vorstehenden Abschnitten der Gelenksbolzen 195, 196 sind Laufräder 200, 201 drehbar gelagert, mit denen sich der Kettenförderer 192 bei beiden Transportbahnen 188, 189 auf in Ofenlängsrichtung verlaufenen, an den Seitenwänden 202, 203 das Ofengestells 204 befestigten Laufschienen 205 abstützt.

Beim Backofen 184 sind im Backraum 206 zwei Backzonen vorgesehen. An der oberen Transportbahn 188 ist eine obere Backzone 207 und an der unteren Transportbahn 189 ist eine untere Backzone 208 vorgesehen. Der Backofen 184 ist mit einer Induktionsheizung versehen. Diese sieht bei der oberen Backzone 207 einen langgestreckten Induktor 209 vor, der ein großflächiges, breites und langgestrecktes Magnetfeld erzeugt, das sich über mehrere hintereinander angeordnete, als Suszeptorplatten ausgebildete Backplatten 187 erstreckt. Der Induktor 209 ist knapp unterhalb der die obere Transportbahn 188 durchlaufenden Backplatten 187 angeordnet. Die Induktionsheizung sieht bei der unteren Backzone 208 einen langgestreckten Induktor 210 vor, der ein großflächiges, breites und langgestrecktes Magnetfeld erzeugt, das sich über mehrere hintereinander angeordnete, als Suszeptorplatten ausgebildete Backplatten 187 erstreckt. Der Induktor 210 ist knapp unterhalb der die untere Transportbahn 188 durchlaufenden Backplatten 187 angeordnet.

Die Induktoren 209, 210 können unterschiedliche Bauformen aufweisen. Sie können die in den Fig. 13-17 dargestellten Bauformen aufweisen. Von diesen Induktoren unterscheiden sich die Induktoren 209, 210 durch die Anzahl der nebeneinander angeordneten Induktorstäbe. Bei den Induktoren 209, 210 sind jeweils 26 Induktorstäbe nebeneinander angeordnet. Die Befestigung der Induktoren 209, 210 im Gestell des Backofens 184 entspricht jeweils der oben im Zusammenhang mit den Fig. 10-12 erläuterten Befestigung.

Im zweiten Backofen 186 sind ebene Backplatten 211 entlang einer Umlaufbahn angeordnet, die sich entlang von zwei übereinander angeordneten, horizontalen Transportbahnen 211, 213 durch den Backofen 186 erstreckt. Die Eingabestation 214 ist am vorderen Ende des Backofens 186 an der oberen Transportbahn 212 angeordnet. In der Eingabestation 214 werden die von der Wendevorrichtung 185 zugeführten Teigfladen auf den nach oben weisenden Backflächen der Backplatten 211 abgesetzt. Die Ausgabestation 215 ist in der Mitte des Backofens 186 an der oberen Transportbahn 212 angeordnet. In der Ausgabestation 215 werden die an beiden Seiten gebackenen Teigfladen von den nach oben weisenden Backflächen der Backplatten 211 abgenommen und aus der Backanlage 183 ausgegeben .

Der zweite Backofen 186 besitzt einen Kettenförderer 216, der entlang der Umlaufbahn der ebene Backplatten 211 angeordnet ist und entgegen dem Uhrzeigersinn umläuft. Der Kettenförderer 216 entspricht in seinem konstruktiven Aufbau dem Kettenförderer 192 des ersten Backofens 184. Beim Kettenförderer 216 sind die ebenen Backplatten 211 ebenfalls an den seitlichen Transportketten des Kettenförderers 216 frei pendelnd aufgehängt und als berührungsfrei induktiv erwärmbare Suszeptorplatten ausgebildet.

Der zweite Backofen 186 ist mit einer Induktionsheizung versehenen, die an beiden Transportbahnen 212, 213 jeweils einen langgestreckten Induktor 217, 218 vorsieht, der ein großflächiges, breites und langgestrecktes Magnetfeld erzeugt, das sich über mehrere hintereinander angeordnete, als Suszeptorplatten ausgebildete Backplatten 211 erstreckt. Die Induktoren sind jeweils 217, 218 knapp unterhalb der die Transportbahn 212, 213 durchlaufenden Backplatten 211 angeordnet, die durch das vom jeweiligen Induktor 217, 218 erzeugte Magnetfeld berührungsfrei induktiv erwärmt werden.

Die Induktoren 217, 218 können unterschiedliche Bauformen aufweisen. Sie können die in den Fig. 13-17 dargestellten Bauformen aufweisen. Von diesen Induktoren unterscheiden sich die Induktoren 217, 218 durch die Anzahl der nebeneinander angeordneten Induktorstäbe. Bei den Induktoren 217, 218 sind jeweils 26 Induktorstäbe nebeneinander angeordnet. Die Befestigung der Induktoren 217, 218 im Gestell des Backofens 186 entspricht jeweils der oben im Zusammenhang mit den Fig. 10-12 erläuterten Befestigung.

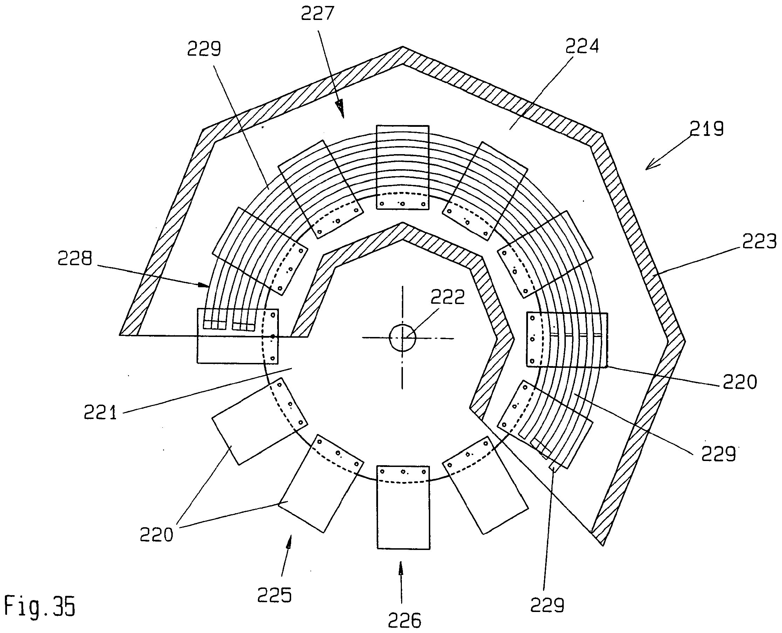

Fig. 35 zeigt einen Backofen 219 zu Herstellung von flachen, einseitig oder beidseitig gebackenen Formkörpern. Die gebackene Formkörper werden auf Backplatten 220 hergestellt, die auf einem horizontalen Drehtisch 221 entlang einer Kreisbahn nebeneinander angeordnet sind. Der Drehtisch 221 ist um eine vertikale Drehachse 222 drehbar. Die Backplatten 220 sind am Drehtisch 221 befestigt und stehen über dessen äußeren Rand radial vor. Die Backplatten 220 werden durch die Drehbewegung des Drehtisches 221 durch den Backofen 219 bewegt. Der Backofen 219 besitzt ein ringförmiges bzw. vieleckiges Gehäuse 223, das sich entlang der Kreisbahn der Backplatten 220 erstreckt und in dem ein Backraum 224 angeordnet ist. An der Vorderseite des Backofens 219 ist das Gehäuse 223 offen ausgebildet. Im offenen Bereich des Gehäuses 223 ist die Eingabestation 225 und die Ausgabestation 226 des Backofens 219 angeordnet. In der Eingabestation 225 werden flache Teigfladen erzeugt. Dazu wird flüssiger Backteig auf die nach oben weisenden Backflächen der Backplatten 220 aufgebracht. Die mit den Teigfladen belegten Backplatten 220 werden vom Drehtisch 221 durch den Backraum 224 befördert. An der Ausgabestation 226 werden die gebackenen Teigfladen von den Backplatten 220 abgenommen und als einseitig gebackene Teigfladen aus dem Backofen 219 ausgegeben, oder - bei der Herstellung von beidseitig gebackenen Teigfladen - mit der Oberseite nach unten umgedreht und wieder auf den Backplatten 220 abgelegt, damit sie beim nächsten Durchlauf durch den Backraum 224 auch an der zweiten Seite gebacken werden. Die beidseitig gebackenen Teigfladen durchlaufen zweimal den Backraum 224 und werden erst nach dem zweiten Durchlauf an der Ausgabestation 226 aus dem Backofen 219 ausgegeben.

Die Backplatten 220 des Backofens 219 sind als berührungsfrei induktiv erwärmbare Suszeptorplatten ausgebildet. Die Suszeptorplatten 220 werden im Backraum 224 von einer Induktionsheizung 227 berührungsfrei induktiv erwärmt. Die Suszeptorplatten 220 geben die in ihnen entstandene Wärme über Wärmeleitung an die an ihren Oberseiten angeordneten Backflächen weiter, auf denen die Teigfladen gebacken werden.

Die Induktionsheizung 227 sieht zumindest einen längs der Kreisbahn angeordneten, langgestreckten Induktor 228 vor, der sich längs der Kreisbahn über mehrer nebeneinander angeordnete Backplatten 220 erstreckt. Der Induktor 228 besitzt mehrere, quer zur Kreisbahn nebeneinander angeordnete, sich längs der Kreisbahn erstreckende, bogenförmig gekrümmte Induktorstäbe 229. Der Induktor 228 erzeugt ein breites Magnetfeld, das sich längs der Kreisbahn über mehrere nebeneinander angeordnete Backplatten 220 erstreckt und diese berührungsfrei induktiv erwärmt. Der langgestreckte Induktor 228 ist vorzugsweise unterhalb der Kreisbahn parallel zu dieser angeordnet. Der langgestreckte Induktor 228 kann auch oberhalb der Kreisbahn angeordnet sein. Im Backraum 224 kann ein solcher langgestreckter Induktor 228 auch oberhalb und unterhalb der Kreisbahn angeordnet sein.

Der langgestreckte Induktor 228 kann in unterschiedlichen Bauformen ausgeführt sein. Er kann eine der in den Fig. 13-17 dargestellten Bauformen aufweisen. Die Befestigung des Induktors 228 im Gehäuse 223 des Backofens 219 entspricht der oben im Zusammenhang mit den Fig. 10-12 erläuterten Befestigung.

## Patentansprüche

1. Backofen (1, 82, 125, 151, 184, 186, 219) mit einer Eingabestation (19, 112, 155, 190, 225), einem Backraum (21, 116, 130, 154, 206, 224), einer Ausgabestation (18, 111, 157, 191, 226), einer entlang einer durch den Backraum (21, 116, 130, 154, 206, 224) führenden Umlaufbahn angeordneten Backfläche und einer Fördereinrichtung (4, 84, 126, 159, 171, 192) für die Backfläche, wobei im Backraum (21, 116, 130, 154, 206, 224) eine mit einer Induktionsheizung versehene Backzone (22, 23, 117, 118, 156, 207, 208) vorgesehen ist, in der zumindest ein parallel zur Umlaufbahn der Backfläche angeordneter, sich längs der Umlaufbahn erstreckender Induktor (59, 60, 61, 62, 63, 66, 71, 77, 119, 120, 121, 122, 139, 140, 179, 180, 209, 210, 217, 218, 228) vorgesehen ist, der ein sich über die Umlaufbahn erstreckendes Magnetfeld erzeugt, das die Backfläche berührungsfrei induktiv erwärmt, wobei die Backfläche aus Backplatten besteht, die als berührungsfrei induktiv erwärmbare Suszeptorplatten (24, 38, 70, 76, 98, 102, 137, 138, 220) ausgebildet sind, wobei der Induktor (59, 60, 61, 62, 63, 66, 71, 77, 119, 120, 121, 122, 139, 140, 179, 180, 209, 210, 217, 218, 228) als sich längs der Umlaufbahn über mehrere Backplatten erstreckender, langgestreckter, Induktor (59, 60, 61, 62, 63, 66, 71, 77, 119, 120, 121, 122, 139, 140, 179, 180, 209, 210, 217, 218, 228) vorgesehen ist, der ein großflächiges, breites, sich längs der Umlaufbahn über mehrere Backplatten erstreckendes Magnetfeld erzeugt, das mehrere als Suszeptorplatten (24, 38, 70, 76, 98, 102, 137, 138, 220) ausgebildete Backplatten gleichzeitig berührungsfrei induktiv erwärmt,
wobei die Induktionsheizung in jeder Backzone (22, 23, 117, 118, 156, 207, 208) zumindest einen sich längs der Umlaufbahn der Backplatten über mehrere Backplatten erstreckenden, langgestreckten Induktor (59, 60, 61, 62, 63, 66, 71, 77, 119, 120, 121, 122, 139, 140, 179, 180, 209, 210, 217, 218, 228) vorsieht, der ein breites Magnetfeld erzeugt, das sich längs der Umlaufbahn der Backplatten über mehrere Backplatten erstreckt und mehrere als Suszeptorplatten (24, 38, 70, 76, 98, 102, 137, 138, 220) ausgebildete Backplatten gleichzeitig berührungsfrei induktiv erwärmt,
**dadurch gekennzeichnet,**
- **dass** die Backplatten obere und untere Backplatten umfassen,
- **dass** obere und untere Zangenteile umfassende Backzangen vorgesehen sind, und dass die oberen und unteren Backplatten in den oberen und unteren Zangenteilen der Backzangen enthalten oder aufgenommen sind,
- **und dass** der langgestreckte Induktor (63, 139, 140) zwei oder mehrere, nebeneinander angeordnete, sich längs der Umlaufbahn der Backplatten über mehrere Backplatten erstreckende, parallel zueinander verlaufende Induktorstäbe (64, 139a, 140a) umfasst,
- **und dass** jeder sich längs der Umlaufbahn der Backplatten über mehrere Backplatten erstreckende Induktor im Backofen horizontal angeordnet und am Gestell des Backofens vertikal verstellbar befestigt ist.

2. Backofen nach Anspruch 1, **dadurch gekennzeichnet, dass** die Backplatten entlang einer Umlaufbahn angeordnet sind, die durch zwei übereinander angeordnete, horizontale Transportbahnen (5, 6, 85, 86, 188, 189) führt, und dass an beiden Transportbahnen (5, 6, 85, 86, 188, 189) eine Backzone (22, 23, 117, 118, 207, 208) vorgesehen ist, in der zumindest ein parallel zur Umlaufbahn der Backplatten angeordneter, langgestreckter Induktor (59, 60, 61, 62, 63, 66, 71, 77, 119, 120, 121, 122, 209, 210, 217, 218) vorgesehen ist, der mit seinem Magnetfeld mehrere als Suszeptorplatten (24, 38, 70, 76, 98, 102) ausgebildete Backplatten gleichzeitig berührungsfrei induktiv erwärmt.

3. Backofen nach Anspruch 1, **dadurch gekennzeichnet, dass** die Backplatten entlang einer kreisförmigen Umlaufbahn angeordnet und auf einem um eine vertikale Drehachse drehbaren Drehtisch (126, 221) befestigt sind, der die Backplatten mit seiner Drehbewegung durch den Backraum (130, 224) befördert, und dass im Backraum (130, 224) eine Backzone vorgesehen ist, in der zumindest ein langgestreckter Induktor (139, 140, 228) vorgesehen ist, der parallel zur kreisförmigen Umlaufbahn angeordnet ist und sich längs der kreisförmigen Umlaufbahn über mehrere als Suszeptorplatten (137, 138, 220) ausgebildete Backplatten erstreckt.

4. Backofen nach Anspruch 1, **dadurch gekennzeichnet, dass** im Backofen (1, 82) entlang von zwei durch den Backraum (21, 116) führenden Umlaufbahnen angeordnete, jeweils als Suszeptorplatten (24, 38, 98, 102) ausgebildete, obere und untere Backplatten vorgesehen sind, die in Backzangen (3, 83) aufgenommen sind, die entlang einer durch den Backraum (21, 116) führenden Umlaufbahnen angeordnet sind und von der Fördereinrichtung (4, 84) des Backofens (1, 82) im geschlossenen Zustand durch den Backraum (21, 116) befördert werden, und dass im Backraum (21, 116) zumindest eine Backzone (22, 23, 117, 118) vorgesehen ist, in der sowohl oberhalb als auch unterhalb der Umlaufbahn der Backzangen (3, 83) jeweils zumindest ein langgestreckter Induktor (59, 60, 61, 62, 119, 120, 121, 122) angeordnet ist, der mit seinem Magnetfeld die Suszeptorplatten (24, 38, 98, 102) von mehreren Backzangen (3, 83) gleichzeitig berührungsfrei induktiv erwärmt.

5. Backofen nach Anspruch 4, **dadurch gekennzeichnet, dass** mehrere Backzangen (127) entlang einer Kreisbahn nebeneinander angeordnet und auf einem um eine vertikale Drehachse drehbaren Drehtisch (126) befestigt sind und dass im Backraum (130) an der Kreisbahn zumindest eine Backzone vorgesehen ist, in der sowohl oberhalb als auch unterhalb der Kreisbahn jeweils zumindest ein langgestreckter, bogenförmiger Induktor (139, 140) angeordnet ist, der mit seinem Magnetfeld die Suszeptorplatten (137,138) von mehreren Backzangen (127) gleichzeitig berührungsfrei induktiv erwärmt.

6. Backofen nach Anspruch 4, **dadurch gekennzeichnet, dass** die als Suszeptorplatten (24, 38, 98, 102) ausgebildete, obere und untere Backplatten enthaltende Backzangen (3, 83) entlang einer Umlaufbahn angeordnet sind, die im Backraum (21, 116) durch zwei übereinander angeordnete, horizontale Transportbahnen (5, 6, 85, 86) führt, und dass an beiden Transportbahnen (5, 6, 85, 86) eine Backzone (22, 23, 117, 118) vorgesehen ist, in der sowohl oberhalb als auch unterhalb der Transportbahn (5, 6, 85, 86) jeweils zumindest ein langgestreckter Induktor (59, 60, 61, 62, 119, 120, 121, 122) angeordnet ist, der mit seinem Magnetfeld die Suszeptorplatten (24, 38, 98, 102) von mehreren Backzangen (3, 83) gleichzeitig berührungsfrei induktiv erwärmt.

7. Backofen nach einem der Ansprüche 4 bis 6, **dadurch gekennzeichnet, dass** bei den Backzangen (83) der obere Zangenteil über ein Scharnier (101) mit dem unteren Zangenteil schwenkbar verbunden ist und dass die Suszeptorplatten (98, 102) in beiden Zangenteilen jeweils zwischen zwei an die Suszeptorplatten (98, 102) seitlich anschließenden Randstücken (99, 100, 103, 104) angeordnet sind, wobei die auf der Scharnierseite der Backzange (83) angeordneten Randstücke (99, 103) der beiden Zangenteile durch das Scharnier (101) miteinander verbunden sind und das am freien Ende des oberen Zangenteiles angeordnete Randstück (104) die Steuerrolle (105) zum Öffnen und Schließen der Backzange (83) trägt.

8. Backofen nach Anspruch 7, **dadurch gekennzeichnet, dass** die Suszeptorplatten (98, 102) gegenüber den Randstücken (99, 100, 103, 104) der beiden Zangenteile elektrisch isoliert sind.

9. Backofen nach Anspruch 7 oder 8, **dadurch gekennzeichnet, dass** auf dem vom Scharnier (101) abgewandten Seitenrand der Backzange (83) eine Backzangenverriegelungsvorrichtung (106) vorgesehen ist, deren Verriegelungselemente (107, 108) an jenen Randstücken (100, 104) der beiden Zangenteile angebracht sind, welche auf dem vom Scharnier (101) abgewandten Seitenrand der Backzange (83) neben den Suszeptorplatten (98, 102) angeordnet sind.

10. Backofen nach einem der Ansprüche 4 bis 6, **dadurch gekennzeichnet, dass** bei den Backzangen (3) beide Zangenteile mit flachen Plattenrahmen (25, 39) versehen sind, in denen die Suszeptorplatten (24, 38) mit freiliegenden Rückseiten angeordnet sind.

11. Backofen nach Anspruch 10, **dadurch gekennzeichnet, dass** die flachen Plattenrahmen (25, 39) zu beiden Seiten der Suszeptorplatten (24, 38) angeordnete, seitliche Rahmenteile (26, 27, 40, 41) besitzen, die durch einen entlang dem vorderen Rand der Suszeptorplatte (24, 38) angeordneten, vorderen Querholm (28, 42) und durch einen entlang dem hinteren Rand der Suszeptorplatte (24, 38) angeordneten, hinteren Querholm (29, 43) miteinander verbunden sind.

12. Backofen nach Anspruch 10 oder 11, **dadurch gekennzeichnet, dass** die Suszeptorplatten (24, 38) in den flachen Plattenrahmen (25, 39) schwimmend gelagert bzw. senkrecht zur Plattenebene begrenzt verschiebbar angeordnet sind.

13. Backofen nach Anspruch 12, **dadurch gekennzeichnet, dass** die Suszeptorplatten (24, 38) in den Querholmen (28, 29, 42, 43) der flachen Plattenrahmen (25, 39) senkrecht zur Plattenebene begrenzt verschiebbar angeordnet sind.

14. Backofen nach einem der Ansprüche 10 bis 13, **dadurch gekennzeichnet, dass** bei den flachen Plattenrahmen (25, 39) die beiden Querholme (28,, 29, 42, 43) gegenüber den beiden seitlichen Rahmenteilen (26, 27, 40, 41) elektrisch isoliert sind.

15. Backofen nach einem der Ansprüche 7 bis 14, **dadurch gekennzeichnet, dass** die Suszeptorplatten (24, 38) in sie eingebettete, als Backformhälften ausgebildete Einsätze enthalten.

16. Backofen nach Anspruch 15, **dadurch gekennzeichnet, dass** die Suszeptorplatten (24, 38) aus Gusseisen oder Stahl und die als Backformhälften ausgebildeten Einsätze aus Aluminium bestehen.

17. Backofen einem der Ansprüche 1 bis 16, **dadurch gekennzeichnet, dass** der langgestreckte Induktor einzelne, parallel zueinander verlaufende und jeweils eine eigene Induktorschleife bildende Induktorstäbe umfasst.

18. Backofen einem der Ansprüche 1 bis 16, **dadurch gekennzeichnet, dass** der langgestreckte Induktor nebeneinander angeordnete, jeweils eine eigene Induktorschleife bildende, U-förmige Induktoren (66) umfasst, die jeweils zwei parallel zueinander verlaufende Induktorstäbe (67) aufweisen.

19. Backofen einem der Ansprüche 1 bis 16, **dadurch gekennzeichnet, dass** der langgestreckte Induktor zwei nebeneinander angeordnete, jeweils eine eigene Induktorschleife bildende Induktoren umfasst, bei denen die parallel zueinander verlaufenden Induktorstäbe an ihren Enden durch Querstäbe verbunden sind und zusammen mit diesen eine in Längsrichtung des Induktors langgestreckte Spirale bilden.

20. Backofen einem der Ansprüche 1 bis 16, **dadurch gekennzeichnet, dass** der langgestreckte Induktor (63, 64) als eine einzelne Induktorschleife ausgebildet ist und dass seine parallel zueinander verlaufenden Induktorstäbe (64) an ihren Enden durch Querstäbe (65) verbunden sind und zusammen mit diesen eine in Längsrichtung des Induktors langgestreckte Spirale bilden.

21. Backofen einem der Ansprüche 1 bis 16, **dadurch gekennzeichnet, dass** der langgestreckte Induktor als eine einzelne Induktorschleife ausgebildet ist, die zwei nebeneinander angeordnete Halbschleifen enthält, bei denen die parallel zueinander verlaufenden Induktorstäbe an ihren Enden durch Querstäbe verbunden sind und zusammen mit diesen jeweils eine in Längsrichtung des Induktors langgestreckte Spirale bilden.

22. Backofen nach Anspruch 21, **dadurch gekennzeichnet, dass** die Induktorstäbe mit den sie verbindenden Querstäben bei der einen Halbschleife eine im Uhrzeigersinn verlaufende Spirale und bei der anderen Halbschleife eine gegen den Uhrzeigersinn verlaufende Spirale bilden.

23. Backofen nach Anspruch 21, **dadurch gekennzeichnet, dass** die Induktorstäbe mit den sie verbindenden Querstäben bei beiden Halbschleifen gleichsinnig verlaufende Spiralen bilden.

24. Backofen einem der Ansprüche 1 bis 16, **dadurch gekennzeichnet, dass** der langgestreckte Induktor (63) als eine einzelne Induktorschleife ausgebildet ist und dass seine parallel zueinander verlaufenden Induktorstäbe (64) an ihren Enden durch Querstäbe (65) abwechselnd miteinander verbunden sind und zusammen mit den Querstäben (65) ein Mäandermuster bilden, bei dem die Mäanderschleifen quer zur Längsrichtung des Induktors (63) aufeinanderfolgen.

25. Backofen nach einem der Ansprüche 1 bis 24, **dadurch gekennzeichnet, dass** als Induktorstäbe, die sich längs der Umlaufbahn der Backplatten über mehrere Backplatten erstrecken, jeweils mit einem niedrigen, rechteckigen Vollquerschnitt versehene, massive Stäbe (71a, 77a) vorgesehen sind, die mit ihren Breitseiten den als Suszeptorplatten (70, 76) ausgebildeten Backplatten zugewandt sind.

26. Backofen nach einem der Ansprüche 1 bis 27, **dadurch gekennzeichnet, dass** jeder Induktor am Gestell des Backofens elektrisch isoliert befestigt ist.

27. Backofen nach Anspruch 26, **dadurch gekennzeichnet, dass** jeder Induktor mit seinen Induktorstäben am Gestell des Backofens elektrisch isoliert befestigt ist.

28. Backofen nach einem der Ansprüche 1 bis 27, **dadurch gekennzeichnet, dass** jeder Induktor in einem Abstand parallel zur Umlaufbahn der als Suszeptorplatten ausgebildeten Backplatten angeordnet ist, welcher kleiner ist, als die Reichweite des vom Induktor erzeugten Magnetfeldes.

## Claims

1. An oven (1, 82, 125, 151, 184, 186, 219) with an input station (19, 112, 155, 190, 225), a baking chamber (21, 116, 130, 154, 206, 224), an output station (18, 111, 157, 191, 226), a baking surface arranged along a circulation path passing through the baking chamber (21, 116, 130, 154, 206, 224) and a conveying apparatus (4, 84, 126, 159, 171, 192) for the baking surface, wherein a baking zone (22, 23, 117, 118, 156, 207, 208) which is provided with induction heating is provided in the baking chamber (21, 116, 130, 154, 206, 224), at least one inductor (59, 60, 61, 62, 63, 66, 71, 77, 119, 120, 121, 122, 139, 140, 179, 180, 209, 210, 217, 218, 228) being provided in said baking zone, said inductor being arranged parallel to the circulation path of the baking surface and extending along the circulation path, and said inductor producing a magnetic field which extends over the circulation path and which inductively heats the baking surface without any contact, wherein the baking surface consists of baking plates which are configured as susceptor plates (24, 38, 70, 76, 98, 102, 137, 138, 220) which may be heated inductively without any contact, wherein the inductor (59, 60, 61, 62, 63, 66, 71, 77, 119, 120, 121, 122, 139, 140, 179, 180, 209, 210, 217, 218, 228) is provided as an elongated inductor (59, 60, 61, 62, 63, 66, 71, 77, 119, 120, 121, 122, 139, 140, 179, 180, 209, 210, 217, 218, 228) which extends along the circulation path over a plurality of baking plates and which produces a large-area, broad magnetic field which extends along the circulation path over a plurality of baking plates and which simultaneously inductively heats a plurality of baking plates which are configured as susceptor plates (24, 38, 70, 76, 98, 102, 137, 138, 220) without any contact,
wherein the induction heating in each baking zone (22, 23, 117, 118, 156, 207, 208) provides at least one elongated inductor (59, 60, 61, 62, 63, 66, 71, 77, 119, 120, 121, 122, 139, 140, 179, 180, 209, 210, 217, 218, 228) which extends along the circulation path of the baking plates over a plurality of baking plates and which produces a broad magnetic field which extends along the circulation path of the baking plates over a plurality of baking plates and which simultaneously inductively heats a plurality of baking plates which are configured as susceptor plates (24, 38, 70, 76, 98, 102, 137, 220) without any contact, **characterised**
- **in that** the baking plates comprise upper and lower baking plates,
- **in that** baking tongs comprising upper and lower tong parts are provided, and in that the upper and lower baking plates are contained or received in the upper and lower tong parts of the baking tongs,
- and **in that** the elongated inductor (63, 139, 140) comprises two or more inductor bars (64, 139a, 140a) which are arranged adjacent to one another, which extend along the circulation path of the baking plates over a plurality of baking plates and which run parallel to one another,
- and **in that** each inductor which extends along the circulation path of the baking plates over a plurality of baking plates is arranged horizontally in the oven and is fastened in a vertically adjustable manner to the frame of the oven.

2. The oven according to Claim 1, **characterised in that** the baking plates are arranged along a circulation path which passes through two superimposed horizontal transport paths (5, 6, 85, 86, 188, 189), and **in that** a baking zone (22, 23, 117, 118, 207, 208) is provided on the two transport paths (5, 6, 85, 86, 188, 189), at least one elongated inductor (59, 60, 61, 62, 63, 66, 71, 77, 119, 120, 121, 122, 209, 210, 217, 218) which is arranged parallel to the circulation path of the baking plates being provided in said baking zone, said inductor simultaneously inductively heating by its magnetic field a plurality of baking plates which are configured as susceptor plates (24, 38, 70, 76, 98, 102) without any contact.

3. The oven according to Claim 1, **characterised in that** the baking plates are arranged along a circular circulation path and are fastened to a turntable (126, 221) which is rotatable about a vertical rotational axis and which conveys the baking plates by means of its rotational movement through the baking chamber (130, 224), and **in that** a baking zone is provided in the baking chamber (130, 224), at least one elongated inductor (139, 140, 228) being provided in said baking zone, said inductor being arranged parallel to the circular circulation path and extending along the circular circulation path over a plurality of baking plates which are configured as susceptor plates (137, 138, 220).

4. The oven according to Claim 1, **characterised in that** upper and lower baking plates are provided in the oven (1, 82), said baking plates being arranged along two circulation paths passing through the baking chamber (21, 116), said baking plates being configured in each case as susceptor plates (24, 38, 98, 102) and being received in baking tongs (3, 83) which are arranged along a circulation path passing through the baking chamber (21, 116) and which in the closed state are conveyed by the conveying apparatus (4, 84) of the oven (1, 82) through the baking chamber (21, 116), and **in that** at least one baking zone (22, 23, 117, 118) is provided in the baking chamber (21, 116), in each case at least one elongated inductor (59, 60, 61, 62, 119, 120, 121, 122) being arranged in said baking zone both above and below the circulation path of the baking tongs (3, 83), said inductor simultaneously inductively heating by its magnetic field the susceptor plates (24, 38, 98, 102) of a plurality of baking tongs (3, 83) without any contact.

5. The oven according to Claim 4, **characterised in that** a plurality of baking tongs (127) are arranged adjacent to one another along a circular path and are fastened to a turntable (126) which is rotatable about a vertical rotational axis, and **in that** at least one baking zone is provided in the baking chamber (130) on the circular path, in each case at least one elongated arcuate inductor (139, 140) being arranged in said baking zone both above and below the circular path, said inductor simultaneously inductively heating by its magnetic field the susceptor plates (137, 138) of a plurality of baking tongs (127) without any contact.

6. The oven according to Claim 4, **characterised in that** the baking tongs (3, 83), which contain upper and lower baking plates which are configured as susceptor plates (24, 38, 98, 102), are arranged along a circulation path which passes in the baking chamber (21, 116) through two superimposed horizontal transport paths (5, 6, 85, 86) and **in that** a baking zone (22, 23, 117, 118) is provided on the two transport paths (5, 6, 85, 86), in each case at least one elongated inductor (59, 60, 61, 62, 119, 120, 121, 122) being arranged in said baking zone both above and below the transport path (5, 6, 85, 86), said inductor simultaneously inductively heating by its magnetic field the susceptor plates (24, 38, 98, 102) of a plurality of baking tongs (3, 83) without any contact.

7. The oven according to one of Claims 4 to 6, **characterised in that**, in the case of the baking tongs (83), the upper tong part is pivotably connected via a hinge (101) to the lower tong part and **in that** the susceptor plates (98, 102) in the two tong parts are arranged in each case between two edge pieces (99, 100, 103, 104) which laterally adjoin the susceptor plates (98, 102), wherein the edge pieces (99, 103) of the two tong parts arranged on the hinge side of the baking tong (83) are connected together by the hinge (101) and the edge piece (104) arranged on the free end of the upper tong part bears the control roller (105) for opening and closing the baking tong (83).

8. The oven according to Claims 7, **characterised in that** the susceptor plates (98, 102) are electrically insulated relative to the edge pieces (99, 100, 103, 104) of the two tong parts.

9. The oven according to Claim 7 or 8, **characterised in that** a baking tong locking device (106) is provided on the side edge of the baking tong (83) which is remote from the hinge (101), the locking elements (107, 108) of said baking tong locking device being attached to those edge pieces (100, 104) of the two tong parts which are arranged on the side edge of the baking tong (83) which is remote from the hinge (101), adjacent to the susceptor plates (98, 102).

10. The oven according to one of Claims 4 to 6, **characterised in that**, in the case of the baking tongs (3), the two tong parts are provided with flat plate frames (25, 39), the susceptor plates (24, 38) being arranged therein with exposed rear faces.

11. The oven according to Claim 10, **characterised in that** the flat plate frames (25, 39) have lateral frame parts (26, 27, 40, 41) which are arranged on the two sides of the susceptor plates (24, 38) and which are connected together by a front cross member (28, 42) which is arranged along the front edge of the susceptor plate (24, 38) and by a rear cross member (29, 43) which is arranged along the rear edge of the susceptor plate (24, 38).

12. The oven according to Claim 10 or 11, **characterised in that** the susceptor plates (24, 38) are floatingly mounted in the flat plate frames (25, 39) and/or arranged so as to be displaceable to a limited extent perpendicular to the plate plane.

13. The oven according to Claim 12, **characterised in that** the susceptor plates (24, 38) are arranged in the cross members (28, 29, 42, 43) of the flat plate frames (25, 39) so as to be displaceable to a limited extent perpendicular to the plate plane.

14. The oven according to one of Claims 10 to 13, **characterised in that**, in the case of the flat plate frames (25, 39), the two cross members (28, 29, 42, 43) are electrically insulated relative to the two lateral frame parts (26, 27, 40, 41).

15. The oven according to one of Claims 7 to 14, **characterised in that** the susceptor plates (24, 38) contain inserts which are embedded therein and which are configured as baking mould halves.

16. The oven according to Claim 15, **characterised in that** the susceptor plates (24, 38) consist of cast iron or steel and the inserts which are configured as baking mould halves consist of aluminium.

17. The oven according to one of Claims 1 to 16, **characterised in that** the elongated inductor comprises individual inductor bars which run parallel to one another and which in each case form a dedicated inductor loop.

18. The oven according to one of Claims 1 to 16, **characterised in that** the elongated inductor comprises U-shaped inductors (66) which are arranged adjacent to one another, which in each case form a dedicated inductor loop and which in each case comprise two inductor bars (67) which run parallel to one another.

19. The oven according to one of Claims 1 to 16, **characterised in that** the elongated inductor comprises two inductors which are arranged adjacent to one another, which in each case form a dedicated inductor loop and in which the inductor bars which run parallel to one another are connected at their ends by transverse bars and form together therewith a coil which is elongated in the longitudinal direction of the inductor.

20. The oven according to one of Claims 1 to 16, **characterised in that** the elongated inductor (63, 64) is configured as an individual inductor loop, and **in that** its inductor bars (64) which run parallel to one another are connected at their ends by transverse bars (65) and form together therewith a coil which is elongated in the longitudinal direction of the inductor.

21. The oven according to one of Claims 1 to 16, **characterised in that** the elongated inductor is configured as an individual inductor loop which contains two half-loops which are arranged adjacent to one another and in which the inductor bars which run parallel to one another are connected at their ends by transverse bars and in each case form together therewith a coil which is elongated in the longitudinal direction of the inductor.

22. The oven according to Claim 21, **characterised in that** the inductor bars form, with the transverse bars which connect said inductor bars, a coil which runs clockwise in the case of the one half-loop and a coil which runs counterclockwise in the case of the other half-loop.

23. The oven according to Claim 21, **characterised in that** the inductor bars form, with the transverse bars which connect said inductor bars, coils which run in the same direction in the case of the two half-loops.

24. The oven according to one of Claims 1 to 16, **characterised in that** the elongated inductor (63) is configured as an individual inductor loop and **in that** its inductor bars (64) which run parallel to one another are connected together alternately at their ends by transverse bars (65) and together with the transverse bars (65) form a meandering pattern in which the meandering loops follow one another transversely to the longitudinal direction of the inductor (63) .

25. The oven according to one of Claims 1 to 24, **characterised in that** solid bars (71a, 77a), which are provided in each case with a low, rectangular full cross section and which with their broad sides face the baking plates which are configured as susceptor plates (70, 76), are provided as inductor bars which extend along the circulation path of the baking plates over a plurality of baking plates.

26. The oven according to one of Claims 1 to 27, **characterised in that** each inductor is fastened to the frame of the oven in an electrically insulated manner.

27. The oven according to Claim 26, **characterised in that** each inductor is fastened with its inductor bars to the frame of the oven in an electrically insulated manner.

28. The oven according to one of Claims 1 to 27, **characterised in that** each inductor is arranged at a spacing parallel to the circulation path of the baking plates which are configured as susceptor plates, said spacing being smaller than the range of the magnetic field produced by the inductor.

## Revendications

1. Four de cuisson (1,82,125,151,184,186,219) avec un poste d'introduction (19,112,155,190,225), un espace de cuisson (21,116,130,154,206,224), un poste de détournement (18,111,157,191,226), une surface de cuisson disposée le long d'une piste de circulation passant par l'espace de cuisson (21,116,130,154,206,224), et un dispositif de transport (4,84,126,159,171,192) pour la surface de cuisson, une zone de cuisson (22,23,117,118,156,207,208) dotée d'un chauffage par induction étant prévue dans l'espace de cuisson (21,116,130,154,206,224), dans laquelle est prévu au moins un inducteur (59,60,61,62,63,66,71,77,119,120,121,122,139,140, 179,180,209,210,217,218,228) disposé parallèlement à la piste de circulation de la surface de cuisson, s'étendant longitudinalement à la piste de circulation, qui produit un champ magnétique s'étendant sur la piste de circulation, qui chauffe de manière inductive sans contact la surface de cuisson, la surface de cuisson étant composée de plaques de cuisson qui sont constituées comme des plaques de suscepteur (24,38,70,76,98,102,137,138,220) pouvant être chauffées de manière inductive sans contact, l'inducteur (59,60,61,62,63,66,71,77,119,120,121, 122,139,140,179,180,209,210,217,218,228) étant prévu comme inducteur (59,60,61,62,63,66,71,77,119,120,121,122,139,140, 179,180,209,210,217,218,228) allongé, s'étendant longitudinalement à la piste de circulation sur plusieurs plaques de cuisson, qui produit un champ magnétique de grande surface, large, s'étendant longitudinalement à la piste de circulation sur plusieurs plaques de cuisson, qui chauffe simultanément de manière inductive sans contact plusieurs plaques de cuisson constituées comme des plaques de suscepteur (24,38,70,76,98,102,137,138,220),
le chauffage par induction dans chaque zone de cuisson (22,23,117,118,156,207,208) prévoyant au moins un inducteur (59,60,61,62,63,66,71,77,119,120,121,122,139,140, 179,180,209,210,217,218,228) allongé, s'étendant longitudinalement le long de la piste de circulation sur plusieurs plaques de cuisson, qui produit un large champ magnétique, qui s'étend longitudinalement à la piste de circulation des plaques de cuisson sur plusieurs plaques de cuisson et chauffe simultanément de manière inductive sans contact plusieurs plaques de cuisson constituées comme des plaques de suscepteur (24,38,70,76,98,102,137,138,220),
**caractérisé en ce que**
- les plaques de cuisson comprennent des plaques de cuisson supérieures et inférieures,
- des pinces de cuisson comprenant des parties de pince supérieures et inférieures sont prévues et **en ce que** les plaques de cuisson supérieures et inférieures sont contenues ou logées dans les parties de pince supérieures et inférieures des pinces de cuisson,
- et **en ce que** l'inducteur allongé (63,139,140) comprend deux ou plusieurs barrettes d'inducteur (64, 139a, 140a) disposées l'une près de l'autre, s'étendant longitudinalement à la piste de circulation des plaques de cuisson sur plusieurs plaques de cuisson, passant parallèlement l'une à l'autre,
- et **en ce que** chaque inducteur s'étendant longitudinalement à la piste de circulation des plaques de cuisson sur plusieurs plaques de cuisson est disposé horizontalement dans le four de cuisson et est fixé pouvant être déplacé verticalement sur le châssis du four de cuisson.

2. Four de cuisson selon la revendication 1, **caractérisé en ce que** les plaques de cuisson sont disposées le long de la piste de circulation, qui passe par deux pistes de transports (5,6,85,86,188,189) horizontales disposées l'une sur l'autre et **en ce qu'**une zone de cuisson (22,23,117,118,207,208) est prévue sur les deux pistes de transport (5,6,85,86,188,189), dans laquelle est prévu au moins un inducteur (59,60,61,62,63,66,71,77,119,120,121,122,209,210, 217,218) allongé, disposé parallèlement à la piste de circulation des plaques de cuisson, qui chauffe simultanément de manière inductive sans contact avec son champ magnétique plusieurs plaques de cuisson constituées comme des plaques de suscepteur (24,38,70,76,98,102).

3. Four de cuisson selon la revendication 1, **caractérisé en ce que** les plaques de cuisson sont disposées le long d'une piste de circulation circulaire et sont fixées sur une table rotative (126,221) pouvant tourner autour d'un axe de rotation vertical, qui transporte les plaques de cuisson avec son mouvement giratoire à travers l'espace de cuisson (130,224) et **en ce que** dans l'espace de cuisson (130,224) est prévue une zone de cuisson dans laquelle est au moins prévu un inducteur allongé (139,140,228), qui est disposé parallèle à la piste de circulation circulaire et s'étend longitudinalement à la piste de circulation circulaire sur plusieurs plaques de cuisson constituées comme plaques de suscepteur (137,138,220).

4. Four de cuisson selon la revendication 1, **caractérisé en ce que** des plaques de cuisson supérieures et inférieures disposées dans le four de cuisson (1,82) le long de deux pistes de circulation passant par l'espace de cuisson (21,116), constituées respectivement comme plaques de suscepteur (24,38,98,102) sont prévues, qui sont logées dans les pinces de cuisson (3,83), qui sont disposées le long d'une piste de circulation passant par l'espace de cuisson (21,116) et sont transportées par le dispositif de transport (4,84) du four de cuisson (1,82) à l'état fermé à travers l'espace de cuisson (21,116) et **en ce qu'**au moins une zone de cuisson (22,23,117,118)) ,est prévue dans l'espace de cuisson (21,116), dans laquelle tant qu'au-dessus qu'en dessous la piste de circulation des pinces de cuisson (3,83) est respectivement disposé au moins un inducteur allongé (59,60,61,62,119,120,121,122), qui chauffe simultanément de manière inductive sans contact avec son champ magnétique les plaques de suscepteur (24,38,98,102) de plusieurs pinces de cuisson (3,83).

5. Four de cuisson selon la revendication 4, **caractérisé en ce que** plusieurs pinces de cuisson (127) sont disposées l'une à côté de l'autre le long d'une piste circulaire et sont fixées sur une table rotative (126) pouvant tourner autour d'un axe de rotation vertical et **en ce que** dans l'espace de cuisson (130) est prévue au moins une zone de cuisson sur la piste circulaire dans laquelle tant au-dessus qu'en dessous la piste circulaire est disposé respectivement au moins un inducteur (139,140) allongé, cintré, qui chauffe simultanément de manière inductive sans contact avec son champ magnétique les plaques de suscepteur (137,138) de plusieurs pinces de cuisson (127).

6. Four de cuisson selon la revendication 4, **caractérisé en ce que** les pinces de cuisson (3,83) constituées comme plaques de suscepteur (24,38,98,102), contenant des plaques de cuisson supérieures et inférieures sont disposées le long d'une piste de circulation, qui passe dans l'espace de cuisson (21,116) par deux pistes de transport (5,6,85,86) horizontales disposées l'une sur l'autre et **en ce qu'**une zone de cuisson (22,23,117,118) est prévue sur les deux pistes de transport (5,6,85,86) dans laquelle est disposé respectivement au moins un inducteur allongé (59,60,61,62,119,120,121,122) tant au-dessus qu'en dessous de la piste de transport (5,6,85,86), qui chauffe simultanément de manière inductive sans contact avec son champ magnétique les plaques de suscepteur (24,38,98,102) de plusieurs pinces de cuisson (3,83).

7. Four de cuisson selon l'une quelconque des revendications 4 à 6, **caractérisé en ce que** concernant les pinces de cuisson (83), la partie de pince supérieure est reliée pouvant pivoter à la partie de pince inférieure par une charnière (101) et **en ce que** les plaques de suscepteur (98,102) sont disposées dans les deux parties de pince entre deux pièces de bord (99,100,103,104) se raccordant latéralement respectivement aux plaques de suscepteur (98,102), les pièces de bord (99,103) des deux parties de pince, disposées sur le côté charnière de la pince de cuisson (83) sont reliées entre elles par la charnière (101) et la pièce de bord (104) disposée sur l'extrémité libre de la partie de pince supérieure porte le galet de commande (105) pour ouvrir et fermer la pince de cuisson (83).

8. Four de cuisson selon la revendication 7, **caractérisé en ce que** les plaques de suscepteur (98,102) sont isolées électriquement vis-à-vis des pièces de bordure (99,100,103,104) des deux parties de pince.

9. Four de cuisson selon la revendication 7 ou 8, **caractérisé en ce qu'**un dispositif de verrouillage des pinces de cuisson (106) est prévu sur le bord latéral de la pince de cuisson (83), éloigné de la charnière (101), dont les éléments de verrouillage (107,108) sont montés sur les pièces de bordure (100,104) des deux parties de pince, lesquels sont disposés sur le bord latéral de la pince de cuisson (83) éloigné de la charnière (101) à côté des plaques de suscepteur (98,102).

10. Four de cuisson selon l'une quelconque des revendications 4 à 6, **caractérisé en ce que** concernant les pinces de cuisson (3), les deux parties de pince sont dotées de cadres de plaque plats (25,39) dans lesquels sont disposées les plaques de suscepteur (24,38) avec des faces arrière dégagées.

11. Four de cuisson selon la revendication 10, **caractérisé en ce que** les cadres de plaque (25,39) plats possèdent des parties de cadre latérales (26,27,40,41), disposées aux deux côtés des plaques de suscepteur (24,38), qui sont reliées entre elles par un longeron transversal (28,42) avant, disposé le long du bord avant de la plaque de suscepteur (24,38) et par un longeron transversal (29,43) arrière, disposé le long du bord arrière de la plaque de suscepteur (24,38).

12. Four de cuisson selon la revendication 10 ou 11, **caractérisé en ce que** les plaques de suscepteur (24,38) sont logées flottantes dans les cadres de plaque plats (25,39) ou sont disposées déplaçables de façon limitée verticalement au plan de la plaque.

13. Four de cuisson selon la revendication 12, **caractérisé en ce que** les plaques de suscepteur (24,38) sont disposées dans les longerons transversaux (28,29,42,43) des cadres de plaque plats (25,39) déplaçables de façon limitée verticalement au plan de la plaque.

14. Four de cuisson selon l'une quelconque des revendications 10 à 13, **caractérisé en ce que** concernant les cadres de plaque plats (25,39), les deux longerons transversaux (28,29,42,43) sont électriquement isolés vis-à-vis des deux parties de cadre latérales (26,27,40,41).

15. Four de cuisson selon l'une quelconque des revendications 7 à 14, **caractérisé en ce que** les plaques de suscepteur (24,38) contiennent des insertions insérées dans celles-ci, constituées comme moitiés de moule de cuisson.

16. Four de cuisson selon la revendication 15, **caractérisé en ce que** les plaques de suscepteur (24,38) sont en fonte ou en acier et les insertions constituées comme des moitiés de moule de cuisson en aluminium.

17. Four de cuisson selon l'une quelconque des revendications 1 à 16, **caractérisé en ce que** l'inducteur allongé comprend des barrettes d'inducteur individuelles, passant verticalement l'une par rapport à l'autre et formant respectivement une boucle d'inducteur propre.

18. Four de cuisson selon l'une quelconque des revendications 1 à 16, **caractérisé en ce que** l'inducteur allongé comprend des inducteurs (66) en forme de U, disposés les uns à côté des autres, formant respectivement une boucle d'inducteur propre, qui comportent respectivement deux barrettes d'inducteur (67) passant parallèlement l'une par rapport à l'autre.

19. Four de cuisson selon l'une quelconque des revendications 1 à 16, **caractérisé en ce que** l'inducteur allongé comprend deux inducteurs disposés l'un près de l'autre, formant respectivement une boucle d'inducteur propre, pour lesquels les barrettes d'inducteur passant parallèlement l'une à l'autre sont reliées à leurs extrémités par des barrettes transversales et forment ensemble avec celles-ci une spirale allongée dans le sens longitudinal de l'inducteur.

20. Four de cuisson selon l'une quelconque des revendications 1 à 16, **caractérisé en ce que** l'inducteur allongé (63,64) est constitué comme une boucle d'inducteur individuelle et **en ce que** ses barrettes d'inducteur (64) passant parallèlement l'une par rapport à l'autre sont reliées à leurs extrémités par des barrettes transversales (65) et forment ensemble avec celles-ci une spirale allongée dans la direction longitudinale de l'inducteur.

21. Four de cuisson selon l'une quelconque des revendications 1 à 16, **caractérisé en ce que** l'inducteur allongé est constitué comme une boucle d'inducteur individuelle, qui contient deux demi-boucles disposées l'une à côté de l'autre, pour lesquelles les barrettes d'inducteur passant parallèles l'une à l'autre sont reliées à leurs extrémités par des barrettes transversales et forment respectivement ensemble avec celles-ci une spirale allongée dans la direction longitudinale de l'inducteur.

22. Four de cuisson selon la revendication 21, **caractérisé en ce que** les barrettes d'inducteur forment pour une demi-boucle avec les barrettes transversales reliant celles-ci une demi-boucle dans le sens des aiguilles d'une montre et pour l'autre demi-boucle une spirale dans le sens contraire aux aiguilles d'une montre.

23. Four de cuisson selon la revendication 21, **caractérisé en ce que** les barrettes d'inducteur forment avec les barrettes transversales les reliant des spirales passant dans le même sens pour les deux demi-boucles.

24. Four de cuisson selon l'une quelconque des revendications 1 à 16, **caractérisé en ce que** l'inducteur allongé (63) est constitué comme une boucle d'inducteur individuelle et **en ce que** ses barrettes d'inducteur (64) passant parallèlement l'une par rapport à l'autre sont reliées entre elles en alternance à leurs extrémités par des barrettes transversales (65) et forment ensemble avec les barrettes transversales (65) un modèle de méandres pour lequel les boucles de méandre se succèdent transversalement à la direction longitudinale de l'inducteur (63).

25. Four de cuisson selon l'une quelconque des revendications 1 à 24, **caractérisé en ce que** des barrettes (71a, 77a) massives s'étendant longitudinalement à la piste de circulation des plaques de cuisson sur plusieurs plaques de cuisson, dotées respectivement d'une section basse, rectangulaire sont prévues en tant que barrettes d'inducteur, qui sont tournées avec leurs côtés larges vers les plaques de cuisson constituées comme plaques de suscepteur (70, 76).

26. Four de cuisson selon l'une quelconque des revendications 1 à 27, **caractérisé en ce que** chaque inducteur est fixé électriquement isolé sur le châssis du four de cuisson.

27. Four de cuisson selon la revendication 26, **caractérisé en ce que** chaque inducteur avec ses barrettes d'inducteur est fixé électriquement isolé sur le châssis du four de cuisson.

28. Four de cuisson selon l'une quelconque des revendications 1 à 27, **caractérisé en ce que** chaque inducteur est disposé à une distance parallèlement à la piste de circulation des plaques de cuisson constituées comme des plaques de suscepteur, laquelle est plus petite que la portée du champ magnétique généré par l'inducteur.
